# EUROPÄISCHE PATENTSCHRIFT

(11) **EP 3 421 254 B1**
(45) Veröffentlichungstag und Bekanntmachung des Hinweises auf die Patenterteilung: **17.02.2021**
(21) Anmeldenummer: 18179453.8
(22) Anmeldetag: 25.06.2018
(51) Int. Cl.: B42D 25/40, B65H 5/04, B65H 5/18, G06K 13/07, G06K 13/08, G06K 13/077

(54) **VORRICHTUNG UND VERFAHREN ZUM TRANSPORT VON DOKUMENTENKÖRPERN UND VERFAHREN UND VORRICHTUNG ZUR HERSTELLUNG VON DOKUMENTEN**
DEVICE AND METHOD FOR TRANSPORTING DOCUMENT BODIES AND METHOD AND DEVICE FOR PRODUCING DOCUMENTS
DISPOSITIF ET PROCÉDÉ DE TRANSPORT DE CORPS DE DOCUMENT ET PROCÉDÉ ET DISPOSITIF DE PRODUCTION DE DOCUMENTS

(30) Priorität: 26.06.2017 DE 102017210731
(43) Veröffentlichungstag der Anmeldung: 02.01.2019
(73) Patentinhaber: Bundesdruckerei GmbH, 10969 Berlin (DE)
(72) Erfinder: Bosien, Andreas, 15712 Königs Wusterhausen (DE); Kramer, Thomas, 80805 München (DE); Richter, Werner, 80999 München (DE); Gödecke, Alexander, 93170 Bernhardswald (DE); Herrmann, Klaus, 30625 Hannover (DE)
(74) Vertreter: Ramrath, Lukas

(56) Entgegenhaltungen:
- DE-A1- 19 610 739
- DE-A1- 19 943 285
- DE-A1-102008 051 516
- DE-A1-102009 050 909
- JP-A- H1 111 063

## Beschreibung

Die Erfindung betrifft eine Vorrichtung und ein Verfahren zum Transport von Dokumentenkörpern, insbesondere von Dokumentenkörpern von Wert- und/oder Sicherheitsdokumenten. Weiter betrifft die Erfindung ein Verfahren und eine Vorrichtung zur Herstellung von Dokumenten, insbesondere von Wert- und/oder Sicherheitsdokumenten.

Die Herstellung von Dokumenten, insbesondere von Wert- und/oder Sicherheitsdokumenten, erfolgt in der Regel in mehreren Herstellungs- oder Prozessschritten. Ein Herstellungsschritt kann beispielsweise das Übertragen von Informationen auf eine RFID-Einrichtung im Dokumentenkörper sein. Ein weiterer Herstellungsschritt kann eine Laserbeschriftung des Dokumentkörpers sein. Während und/oder zwischen Herstellungsschritten kann es erforderlich sein, einen Dokumentenkörper zu transportieren, insbesondere also dessen Position und/oder Orientierung in einem Referenzkoordinatensystem, zu verändern. Beispielsweise kann es notwendig sein, den Dokumentenkörper von einer ersten Lage, in der ein RFID-basiertes Übertragen von Informationen von oder zu einer RFID-Einrichtung des Dokumentenkörpers erfolgt, in eine zweite Lage zu transportieren, in der dann eine Laserbeschriftung erfolgt. Ein Transport kann selbstverständlich auch notwendig sein, um den Dokumentenkörper weiteren Herstellungseinrichtungen oder Prüfeinrichtungen zuzuführen.

Die EP 2 733 099 B1 betrifft eine Laserindividualisierungsvorrichtung für Dokumente. In dem Dokument wird eine Dokumentenselektionseinrichtung beschrieben, welche mindestens zwei Sammeleinrichtungen umfasst, die auch als Magazine bezeichnet werden. Diese dienen zum Aufnehmen von Dokumenten. Weiter umfasst die Dokumentenselektionseinrichtung eine Aufnahmeöffnung zum Zuführen von vereinzelten Dokumenten und Dokumentenführungsmittel zum wahlweisen Leiten des zugeführten Dokuments zu einem der mindestens zwei Magazine. Weiter beschrieben wird ein Drehtisch.

Auch die EP 2 648 919 B1 beschreibt eine solche Laserindividualisierungsvorrichtung.

Weiter bekannt ist die DE 10 2013 100 981 A1. Diese betrifft einen Dokumentenpuffer zum Zugreifen auf drahtlos lesbare Schaltkreise von elektronisch auslesbaren Identifikationsdokumenten mit einer Mehrzahl von benachbarten Aufnahmefächern. Jedes Aufnahmefach ist für die Aufnahme von einem Identifikationsdokument vorgesehen. Dokumente in den Aufnahmefächern sind hierbei parallel zueinander angeordnet.

Die DE 10 2008 051 516 A1 offenbart eine Codiervorrichtung für Datenträger, insbesondere Chipkarten, mit einer Transporteinrichtung zum Transport einer Mehrzahl an Datenträgern in eine erste Transportrichtung einer Transportebene und einer Dreheinrichtung mit einer Mehrzahl an ringartig angeordneten Codierstationen, die jeweils ein Aufnahmefach zum Aufnehmen jeweils eines Datenträgers aufweisen.

Die JP H11 11063 A offenbart eine Artikelentnahmevorrichtung.

Die DE 10 2009 050 909 A1 offenbart eine Vorrichtung zum Austausch von Dokumenten und ein Verfahren zum Austauschen von Dokumenten.

Die DE 199 43 285 A1 offenbart eine Vorrichtung zur Bearbeitung von Chipkarten mit einer Transporteinrichtung zur schrittweisen Transportierung der Chipkarten und mehreren zu einer Arbeitseinheit zusammengefassten Arbeitsstationen.

Die DE 196 10 739 A1 offenbart eine Vorrichtung zum Personalisieren von Chipkarten, welche eine erste Transporteinrichtung zum schrittweisen Transportieren von Chipkarten von einer Kartenzuführung zu einer Kartenausgabe hat und bei der entlang der Transporteinrichtung mehrere Arbeitsstationen für die Chipkarten vorgesehen sind.

Es stellt sich das technische Problem, eine Vorrichtung und ein Verfahren zum Transport von Dokumentenkörpern sowie ein Verfahren und eine Vorrichtung zur Herstellung von Dokumenten zu schaffen, welche einen Bauraumbedarf für den Transport und die Herstellung sowie eine zum Transport notwendige Energie reduzieren.

Die Lösung des technischen Problems ergibt sich durch die Gegenstände mit den Merkmalen der Ansprüche 1, 9, 15 und 16. Weitere vorteilhafte Ausgestaltungen der Erfindungen ergeben sich aus den Unteransprüchen.

Es ist eine Grundidee der Erfindung, eine Dokumenten-Aufnahmeeinrichtung für den Transport von Dokumentenkörpern vorzusehen, die mehrere Aufnahmefächer umfasst, wobei in den Aufnahmefächern angeordnete Dokumentenkörper schräg zueinander angeordnet sind und wobei Ausführrichtungen aus den einzelnen Aufnahmefächern nicht parallel zueinander angeordnet sind, sondern einen vorbestimmten Winkel zueinander aufweisen. Hierdurch können die Dokumentenkörper, vorzugsweise aufgrund der Schwerkraft, aus jedem Aufnahmefach in den gleichen klein dimensionierten Raumbereich ausgeführt werden.

In diesem Raumbereich kann beispielsweise eine weitere Aufnahmeeinrichtung für den ausgeführten Dokumentenkörper oder eine weitere Transporteinrichtung angeordnet sein. Auch ein Herstellungsschritt durchgeführt werden, wenn der Dokumentenkörper in diesem Raumbereich angeordnet ist. Durch die vorgeschlagene Anordnung ergibt sich in vorteilhafter Weise, dass Transportwege von den Aufnahmefächern zu dieser weiteren Aufnahmeeinrichtung oder Transporteinrichtung verkürzt werden. Somit wird auch eine zum Transport notwendige Energie reduziert.

Weiter vorteilhaft kann auch eine Herstellungszeit eines Dokuments verringert werden, da in den Aufnahmefächern bereits ein Herstellungsschritt zur Herstellung des Dokuments durchgeführt werden kann. Somit können zeitlich parallel Herstellungsschritte für in mehreren Aufnahmefächern angeordnete Dokumentenkörper durchgeführt werden.

Vorgeschlagen wird eine Vorrichtung zum Transport von Dokumentenkörpern. Dokumentenkörper können insbesondere Dokumentenkörper von Wert- und/oder Sicherheitsdokumenten sein. Dokumentenkörper können z.B. sogenannte Dokumentenrohlinge sein. Diese können z.B. als Kunststoffkörper ausgebildet sein. Es ist selbstverständlich möglich, dass Dokumentenkörper auch andere Materialien umfassen, beispielsweise Papier, Metallfolien, belichtete Hologramme oder aber auch insbesondere mikroelektronische Schaltkreise und Mikrochips.

Dokumentenkörper können bereits zumindest teilweise personalisiert und/oder individualisiert sein. Dies kann bedeuten, dass in den Dokumentenkörpern bereits Informationen enthalten oder in die Dokumentenkörper eingebracht sind, die spezifisch für eine zur Führung des Dokuments autorisierte Personen sind.

Selbstverständlich kann der Dokumentenkörper auch weitere Merkmale umfassen oder enthalten, insbesondere Sicherheitsmerkmale oder Sicherheitselemente.

Sicherheits- und/oder Wertdokumente sind Dokumente, die mindestens ein Sicherheitsmerkmal aufweisen, welches eine Nachahmung, Verfälschung, ein Kopieren oder Ähnliches zumindest erschwert oder unmöglich macht. Als Wertdokumente können insbesondere Sicherheitsdokumente bezeichnet werden, die einen Wert verkörpern. Sicherheitsdokumente können beispielsweise Reisepässe, Personalausweise, Identifikationskarten, Zugangskarten, Führerscheine, Tickets, aber auch Verpackungen und Echtheitszertifikate sein. Wertdokumente können beispielsweise Postwertzeichen, Banknoten, Aktien, Zollmarken und Ähnliches sein.

Die Vorrichtung umfasst mindestens eine Dokumenten-Aufnahmeeinrichtung. Diese kann im Folgenden auch nur als Aufnahmeeinrichtung bezeichnet werden. Die Aufnahmeeinrichtung weist mindestens zwei Aufnahmefächern auf oder bildet diese aus. Ein Aufnahmefach dient hierbei zur Aufnahme eines Dokumentenkörpers. Der Dokumentenkörper kann hierbei ein vorbestimmtes Format, beispielsweise ein ID1-Format, ein ID2-Format oder ein ID3-Format oder aber auch ein anderes Format, aufweisen. Das Aufnahmefach kann hierbei auch zur Aufnahme von Dokumentenkörpern verschiedener Formate dienen.

Ein Aufnahmefach kann mindestens ein Mittel zur Aufnahme eines Dokumentenkörpers aufweisen, insbesondere zur Aufnahme eines Dokumentenkörpers in einer festgelegten Raumlage. Eine Raumlage kann hierbei eine Position und/oder Orientierung des Dokumentenkörpers in einem Referenzkoordinatensystem bezeichnen, wobei das Referenzkoordinatensystem ein aufnahmeeinrichtungsfestes Koordinatensystem sein kann. Mit anderen Worten kann ein Aufnahmefach derart ausgebildet sein, dass ein in dem Aufnahmefach angeordneter Dokumentenkörper darin in einer vorbestimmten festgelegten Raumlage angeordnet ist. Die festgelegte Raumlage kann insbesondere auch als Signalübertragungslage bezeichnet werden. Dies wird nachfolgend noch näher erläutert.

Jedes Aufnahmefach weist hierbei eine Einführöffnung zur Einführung eines Dokumentenkörpers auf. Weiter weist das Aufnahmefach eine Ausführöffnung zum Ausführen des Dokumentenkörpers auf. Die Einführöffnung ist hierbei von der Ausführöffnung verschieden. Erfindungsgemäß sind die Einführöffnung und die Ausführöffnung an verschiedenen, insbesondere gegenüberliegenden, Enden des Aufnahmefachs angeordnet.

Weiter weist die Aufnahmeeinrichtung mindestens ein Mittel zum Öffnen und Schließen der Ausführöffnung eines Aufnahmefachs auf. Vorzugsweise weist die Aufnahmeeinrichtung pro Aufnahmefach mindestens ein Mittel zum Öffnen und Schließen der Ausführöffnung des jeweiligen Aufnahmefachs auf.

In einem geöffneten Zustand der Ausführöffnung kann ein Dokumentenkörper aus dem Aufnahmefach durch die Ausführöffnung ausgeführt werden. In einem geschlossenen Zustand der Ausführöffnung kann ein im Aufnahmefach angeordneter Dokumentenkörper nicht durch die Ausführöffnung ausgeführt werden. Somit ist es also nicht zwingend notwendig, dass durch das Mittel zum Öffnen und Schließen die Ausführöffnung vollständig verschlossen oder vollständig geöffnet wird.

Weiter sind die Aufnahmefächer der Aufnahmeeinrichtung schräg zueinander orientiert. Dies kann bedeuten, dass in den Aufnahmefächern angeordnete Dokumentenkörper nicht parallel zueinander orientiert sind. Insbesondere können derart aufgenommene Dokumentenkörper einen vorbestimmten Winkel einschließen bzw. mit einem von Null verschiedenen Winkel zueinander angeordnet sein. Der Winkel kann in einem Winkelbereich von 0° (ausschließlich) bis 180° (ausschließlich) liegen.

Die Aufnahmeeinrichtung kann hierbei auch als Magazin bezeichnet werden. Insbesondere kann die Aufnahmeeinrichtung als Rundmagazin oder Karussellmagazin bezeichnet werden.

Die Aufnahmeeinrichtung kann hierbei ortsfest angeordnet sein. Dies bedeutet insbesondere, dass die Aufnahmeeinrichtung mit den Aufnahmefächern keine Translations- und/oder Rotationsbewegung ausführen kann. Die ortsfeste Anordnung kann sich hierbei auf ein vorrichtungsfestes Referenzkoordinatensystem beziehen.

Ein Aufnahmefach kann hierbei von mindestens einer, vorzugsweise jedoch mehreren, Seitenwand/Seitenwänden umfasst oder begrenzt sein. Die Seitenwände können hierbei die Ein- und die Ausführöffnung aufweisen. Es ist möglich, dass sich ein Querschnitt des Aufnahmefachs entlang einer Mittellinie des Aufnahmefachs in einer Richtung, die von der Einführöffnung zur Ausführöffnung orientiert ist, verjüngt, wobei die Querschnittsebene senkrecht zur Mittellinie orientiert ist.

Zwischen Aufnahmefächern, insbesondere zwischen zwei benachbarten Aufnahmefächern, kann mindestens ein Trennelement angeordnet oder ausgebildet sein. Das Trennelement kann hierbei eine Seitenwand für ein Aufnahmefach umfassen oder ausbilden. Auch kann das Trennelement sowohl eine Seitenwand für ein erstes Aufnahmefach und gleichzeitig eine Seitenwand für ein weiteres, benachbartes Aufnahmefach ausbilden.

Dass die Aufnahmefächer der Aufnahmeeinrichtung schräg zueinander orientiert sind, kann bedeuten, dass Mittellinien der Aufnahmefächer einen Winkel größer als 0° und vorzugsweise kleiner als 90° einschließen. Weiter ist es möglich, dass sich Mittellinien von mindestens zwei, vorzugsweise jedoch von allen, Aufnahmefächern in einem gemeinsamen Schnittpunkt schneiden. Hierbei können sich die Mittellinien unter dem festgelegten Winkel schneiden. Eine Mittellinie kann eine Symmetrieachse eines Aufnahmefachs sein.

Weiter ist z.B. möglich, dass Mittelpunkte der Aufnahmefächer, insbesondere geometrische Mittelpunkte, entlang einer Kreissegmentlinie, entlang einer Ellipsensegmentlinie oder einer Polygonsegmentlinie angeordnet sind.

Der Vorrichtung kann eine Haupttransportrichtung zugeordnet sein. In einem montierten Zustand der Vorrichtung kann diese Haupttransportrichtung parallel zu einer Vertikalrichtung sein. Die Vertikalrichtung kann hierbei parallel und in Richtung einer Gewichtskraft orientiert sein. In diesem Fall können alle Mittellinien oder alle bis auf eine Mittellinie schräg und somit nicht parallel zur Haupttransportrichtung orientiert sein.

In dem montierten Zustand kann die Aufnahmeeinrichtung insbesondere derart angeordnet sein, z.B. an einer Trägereinrichtung oder an einer Tragstruktur befestigt sein, dass mindestens ein Anteil der Orientierung einer Mittellinie eines Aufnahmefachs parallel zur Vertikalrichtung bzw. zur Haupttransportrichtung orientiert ist. Somit kann die Aufnahmeeinrichtung mindestens ein Befestigungsmittel zur Befestigung an einer Trägereinrichtung aufweisen, wobei dieses Befestigungsmittel derart angeordnet und/oder ausgebildet ist, dass die Aufnahmeeinrichtung in der beschriebenen Anordnung an der Trägereinrichtung befestigt werden kann.

Wird die Aufnahmeeinrichtung derart angeordnet, dass die Haupttransportrichtung parallel zur Vertikalrichtung orientiert ist, so können Dokumentenkörper aus den Aufnahmefächern durch Wirkung der Schwerkraft ausgeführt werden, insbesondere herausfallen oder herausgleiten. Die Bewegung des Dokumentenkörpers durch die Ausführöffnung aus dem Aufnahmefach heraus kann entlang einer Ausführrichtung erfolgen. Diese Bewegung kann insbesondere eine zumindest teilweise oder vollständig geradlinige Bewegung sein. Auch ist es möglich, dass ein Anfangsabschnitt einer Bewegungstrajektorie der Ausführbewegung eine geradlinige Bewegungstrajektorie ist, z.B. bis sich ein Dokumentenkörper bis zur Hälfte aus dem Aufnahmefach hinausbewegt hat.

Die geradlinige Bewegung kann insbesondere parallel zu der Mittellinie des entsprechenden Aufnahmefachs orientiert sein. Hierbei kann die Ausführrichtung von keinem Aufnahmefach oder von höchstens einem Aufnahmefach parallel zur Vertikalrichtung orientiert sein.

Weiter kann ein Winkel zwischen einer Mittellinie eines ersten Rand-Aufnahmefachs der Aufnahmeeinrichtung und eines weiteren Rand-Aufnahmefachs der Aufnahmeeinrichtung kleiner als 180° sein.

Somit kann durch Öffnen der Ausführöffnung, also das Versetzen der Ausführöffnung in den geöffneten Zustand, ein Dokumentenkörper aus dem Aufnahmefach einem nächsten Prozessschritt zugeführt werden. Insbesondere kann durch Öffnen der Ausführöffnung der Dokumentenkörper aus der Aufnahmeeinrichtung zu einer weiteren Einrichtung, insbesondere einer weiteren Aufnahmeeinrichtung oder Transporteinrichtung, transportiert werden.

Die Vorrichtung zum Transport kann hierbei Teil einer Vorrichtung zur Herstellung sein, die nachfolgend noch näher erläutert wird. Die Vorrichtung zur Herstellung kann insbesondere eine Laserbeschriftung und/oder eine Datenübertragung von und zu dem Dokumentenkörper ermöglichen.

Sind die Mittelpunkte der Aufnahmefächer entlang einer Linie, z.B. der vorhergehend erläuterten Kreissegmentlinie, angeordnet, so können diese festgelegte gleiche Abstände zueinander aufweisen, also äquidistant angeordnet sein.

Ein Gehäuse der Aufnahmeeinrichtung kann als Teilabschnitt einer Wand eines Hohlzylinders ausgebildet sein. Die Aufnahmefächer können sich von einer äußeren Mantelfläche zu einer inneren Mantelfläche des Hohlzylinders erstrecken. Hierbei können Einführöffnungen in einer äußeren Mantelfläche des Hohlzylinders und Ausführöffnungen an einer inneren Mantelfläche des Hohlzylinders angeordnet sein. Somit kann ein Aufnahmefach eine Durchgangsöffnung in der Wand ausbilden, insbesondere im geöffneten Zustand der Ausführöffnung.

Die Aufnahmefächer können somit entlang einer Umfangsrichtung des Teilabschnitts benachbart zueinander angeordnet sein. Die Mittellinien der Aufnahmefächer können sich in einem Punkt auf der Symmetrieachse des Hohlzylinders schneiden.

Die vorgeschlagene Vorrichtung ermöglicht in vorteilhafter Weise, dass mehrere Dokumentenkörper, insbesondere auch zeitgleich, in Aufnahmefächern angeordnet werden können und dann aus den Aufnahmefächern entlang der Ausführrichtungen in einen gemeinsamen Zielbereich transportiert werden können. Ist die Aufnahmeeinrichtung entsprechend angeordnet, so kann der Transport zumindest teilweise oder auch allein durch die Schwerkraft bewirkt werden. Hierbei wirkt zumindest ein Anteil der Gravitationskraft als Antriebskraft für den Dokumentenkörper.

Insbesondere ist es also nicht notwendig, die Aufnahmeeinrichtung zu bewegen, z.B. mit einer Translations- und/oder Rotationsbewegung, um die aus den Aufnahmefächern ausgeführten Dokumentenkörper in den gleichen Zielbereich zu transportieren.

Es ist aber auch möglich, dass die Aufnahmeeinrichtung bewegbar, insbesondere rotierbar, ist. Insbesondere kann die Aufnahmeeinrichtung um eine Rotationsachse rotierbar sein, die durch den erläuterten gemeinsamen Schnittpunkt der Mittellinien der Aufnahmefächer verläuft und senkrecht zu all diesen Mittellinien orientiert ist. Somit kann die Rotationsachse der Symmetrieachse des erläuterten Hohlzylinders entsprechen. In diesem Fall kann die vorgeschlagene Vorrichtung auch eine Antriebseinrichtung zum Antrieb der Aufnahmeeinrichtung umfassen. Weiter kann in diesem Fall ein Winkel zwischen einer Mittellinie eines ersten Rand-Aufnahmefachs der Aufnahmeeinrichtung und eines weiteren Rand-Aufnahmefachs der Aufnahmeeinrichtung auch größer als oder gleich 180° sein. Es ist z.B. vorstellbar, dass die Aufnahmeeinrichtung zum Einführen von Dokumentenkörpern bewegt, insbesondere rotiert, wird. Insbesondere kann die Aufnahmeeinrichtung derart bewegt wird, dass ein Aufnahmefach, in welches ein Dokumentenkörper eingeführt werden soll, in eine Aufnahmelage versetzt wird. Diese Aufnahmelage kann z.B. durch eine nachfolgend noch näher erläuterte Einrichtung zur Einführung festgelegt sein. Insbesondere kann eine Mittellinie des Aufnahmefachs in der Aufnahmelage parallel zur Vertikalrichtung orientiert sein.

Insgesamt ergibt sich in vorteilhafter Weise eine platzsparende Ausbildung einer Aufnahmeeinrichtung, die gleichzeitig eine zum Transport von Dokumentenkörpern benötigte Energie reduziert.

Weiter kann die Vorrichtung eine Einrichtung zur Einführung von Dokumentenkörpern durch die Einführungsöffnung in die Aufnahmefächer aufweisen. Die Einrichtung zur Einführung kann als Positioniereinrichtung ausgebildet sein. Die Positioniereinrichtung kann insbesondere als Roboter, vorzugsweise als Gelenkarmroboter, ausgebildet sein.

Die Positioniereinrichtung kann hierbei eine Einrichtung zur Befestigung, eines Dokumentkörpers an der Einrichtung beispielsweise eine Greifereinrichtung, vorzugsweise eine Sauggreifereinrichtung, umfassen. Mittels der Einrichtung zur Einführung kann ein Dokumentenkörper beispielsweise aus einem Stapelmagazin entnommen und in ein gewünschtes Aufnahmefach eingeführt werden. Hierzu kann die Einrichtung zur Einführung eine gewünschte Orientierung des einzuführenden Dokumentenkörpers einstellen. Die Einrichtung zur Einführung dient somit dem Transport von Dokumentenkörpern in die Aufnahmefächer der Dokumenten-Aufnahmeeinrichtung.

Hierdurch wird in vorteilhafter Weise eine zuverlässige und zeitlich schnelle Bestückung der Aufnahmefächer ermöglicht. Insbesondere kann es nämlich notwendig sein, Dokumentenkörper in verschiedene Orientierungen zu versetzen, um diese in verschiedene Aufnahmefächer einzuführen.

In einer weiteren Ausführungsform umfasst die Vorrichtung eine weitere Aufnahmeeinrichtung. Die weitere Aufnahmeeinrichtung dient zur Aufnahme eines, insbesondere genau eines, Dokumentenkörpers. Insbesondere dient die weitere Aufnahmeeinrichtung der Aufnahmeeinrichtung eines aus einem Aufnahmefach ausgeführten Dokumentenkörpers.

Die weitere Aufnahmeeinrichtung ist in mehrere voneinander verschiedene Übergabelagen bewegbar. Eine Lage bezeichnet hierbei eine Position und/oder Orientierung, insbesondere in einem vorrichtungsfesten Referenzkoordinatensystem. Weiter ist jeweils eine Übergabelage einem Aufnahmefach zugeordnet. Hierbei ist ein Dokumentenkörper durch die Ausführöffnung des Aufnahmefachs, insbesondere entlang einer Ausführrichtung, zur weiteren Aufnahmeeinrichtung bewegbar und durch die weitere Aufnahmeeinrichtung aufnehmbar, wenn sich die weitere Aufnahmeeinrichtung in der dem Aufnahmefach zugeordnete Übergabelage befindet.

Insbesondere kann der Dokumentenkörper in Ausführrichtung durch die Ausführöffnung eines Aufnahmefachs ausgeführt werden. Bei der Bewegung entlang der Ausführrichtung kann der Dokumentenkörper dann in eine Befestigungslage in, an oder auf der weiteren Aufnahmeeinrichtung bewegt werden. In der Befestigungslage kann dann der Dokumentenkörper in, an oder auf der weiteren Aufnahmeeinrichtung befestigt werden.

Die Befestigungslage kann hierbei eine Raumlage relativ zur weiteren Aufnahmeeinrichtung bezeichnen, insbesondere also in einem Koordinatensystem der weiteren Aufnahmeeinrichtung. Eine Übergabelage, eine Signalübertragungslage und auch die nachfolgend noch näher erläuterten Ausgabelage, Abbildungslage und Beschriftungslage(n) können Raumlagen relativ zur vorgeschlagenen Vorrichtung bezeichnen, insbesondere also in einem Koordinatensystem der Vorrichtung. Somit ist es möglich, ein Dokumentenkörper in der Befestigungslage mittels der weiteren Aufnahmeeinrichtung in eine Ausgabelage, Abbildungslage und Beschriftungslage zu transportieren oder zu positionieren.

Die Bewegung aus dem Aufnahmefach in die Befestigungslage kann eine gravitationskraftbedingte Bewegung sein. Insbesondere kann die Bewegung ausschließlich aufgrund der wirkenden Gravitationskraft erfolgen. Somit ist insbesondere kein Aktor oder kein weiteres Betätigungsmittel notwendig, um die Bewegung zu bewirken. Allerdings ist es selbstverständlich auch möglich, ein solches Betätigungsmittel vorzusehen.

Die Ausführrichtung kann parallel zu einer Mittellinie des Aufnahmefachs orientiert sein und eine Richtung aufweisen, die von der Einführ- zur Ausführöffnung orientiert ist. Mit anderen Worten kann ein Dokumentenkörper allein durch die Gravitationskraft aus einem Aufnahmefach in eine Befestigungsanlage in, an oder auf der weiteren Aufnahmeeinrichtung bewegt werden, z.B. rutschen oder gleiten, wenn sich die weitere Aufnahmeeinrichtung in der dem Aufnahmefach zugeordneten Übergabelage befindet.

Die weitere Aufnahmeeinrichtung kann in einen Freigabezustand oder in einen Befestigungszustand versetzt werden. Im Freigabezustand kann ein Dokumentenkörper in zumindest einer Raumrichtung relativ zur weiteren Aufnahmeeinrichtung bewegbar sein. Im Befestigungszustand kann der Dokumentenkörper relativ zur weiteren Aufnahmeeinrichtung ortsfest in, an oder auf der weiteren Aufnahmeeinrichtung befestigt und angeordnet sein. Somit ist der Freigabezustand vom Befestigungszustand verschieden.

Die weitere Aufnahmeeinrichtung kann hierbei ein oder mehrere Befestigungsmittel umfassen, durch die ein Dokumentenkörper in der Befestigungslage befestigt werden kann. Die weitere Aufnahmeeinrichtung kann insbesondere mindestens eine Auflagefläche zum Auf- oder Anlegen eines Dokumentenkörpers aufweisen oder ausbilden.

Die weitere Aufnahmeeinrichtung kann einen Einführabschnitt und einen Ausführabschnitt für einen Dokumentenkörper aufweisen. Durch den Einführabschnitt kann ein Dokumentenkörper in die Befestigungslage, also z.B. zur Auflagefläche, der weiteren Aufnahmeeinrichtung transportiert werden. Durch den Ausführabschnitt kann ein Dokumentenkörper aus der Befestigungslage, also z.B. von der Auflagefläche, wegtransportiert werden.

Es ist vorstellbar, dass der Einführabschnitt und der Ausführabschnitt voneinander verschiedene Abschnitte der weiteren Aufnahmeeinrichtung sind. Insbesondere kann ein Dokumentenkörper auf einer Seite des drehbaren Teils eingeführt und auf einer gegenüberliegenden Seite ausgeführt werden.

Weiter kann die Vorrichtung eine Antriebseinrichtung zur Bewegung der weiteren Aufnahmeeinrichtung umfassen. Mittels der Antriebseinrichtung kann insbesondere eine Antriebsenergie zur Bewegung der weiteren Aufnahmeeinrichtung in die mehreren Übergabelagen erzeugt werden. Selbstverständlich kann die Vorrichtung weiter Mittel zur Übertragung der Antriebsenergie von der Antriebseinrichtung zur weiteren Aufnahmeeinrichtung umfassen. Beispielsweise kann eine Antriebseinrichtung als elektrische Maschine, insbesondere als Servomotor, ausgebildet sein. Ein Mittel zur Übertragung kann beispielsweise ein mechanisches Kopplungselement, insbesondere ein Riemenkopplungselement, umfassen.

Weiter kann die Vorrichtung eine weitere Antriebseinrichtung zur Versetzung der weiteren Aufnahmeeinrichtung in den Freigabezustand oder in den Befestigungszustand umfassen. Diese Antriebseinrichtung kann beispielsweise von der ersten Antriebseinrichtung verschieden sein. Insbesondere kann die weitere Antriebseinrichtung eine pneumatische Antriebseinrichtung sein oder mindestens ein pneumatisch betätigbares Betätigungselement umfassen. Hierbei wird die entsprechende Antriebsenergie pneumatisch erzeugt.

Weiter kann die Vorrichtung mindestens eine Einrichtung zur Lagebestimmung der weiteren Aufnahmeeinrichtung umfassen. Die Richtung zur Lagebestimmung kann insbesondere als Sensor ausgebildet sein oder einen solchen umfassen. Hierdurch kann bestimmt werden, in welcher Raumlage sich die Aufnahmeeinrichtung befindet.

Die weitere Aufnahmeeinrichtung kann insbesondere als Drehtisch ausgebildet sein. Dass der ausgeführte Dokumentenkörper von der weiteren Aufnahmeeinrichtung aufnehmbar ist, kann insbesondere bedeuten, dass der weitere Dokumentenkörper in oder an oder auf der weiteren Aufnahmeeinrichtung befestigt werden kann.

Es ergibt sich in vorteilhafter Weise, dass ein Dokumentenkörper aus einem Aufnahmefach zu einer weiteren Aufnahmeeinrichtung transportiert und durch die weitere Aufnahmeeinrichtung dann weiter transportiert oder in einer oder mehreren gewünschten Raumlagen positioniert werden kann. Dieser Transport oder die Positionierung kann insbesondere der Vorbereitung und/oder Durchführung von mindestens einem Herstellungsschritt dienen. Durch die vorgeschlagene Anordnung ergibt sich eine besonders platzsparende Ausbildung der entsprechenden Vorrichtung zum Transport.

In einer weiteren Ausführungsform ist zumindest ein Teil der weiteren Aufnahmeeinrichtung um mindestens eine erste Drehachse in voneinander verschiedene Übergabelagen drehbar. Dieser Teil kann als drehbarer Teil bezeichnet werden. Der drehbare Teil kann insbesondere der Aufnahmeteil der weiteren Aufnahmeeinrichtung sein, also der Teil an, in oder auf einem der Dokumentkörper angeordnet werden kann. Der Aufnahmeteil kann die vorhergehend erläuterte Auflagefläche für den Dokumentenkörper aufweisen oder ausbilden. Die erste Drehachse kann hierbei orthogonal zu der vorhergehend erläuterten Haupttransportrichtung und/oder orthogonal zu den Mittellinien der Aufnahmefächer orientiert sein.

Es ist weiter möglich, dass die Einrichtung zur Lagebestimmung einen Drehlagensensor umfasst.

Selbstverständlich kann die weitere Aufnahmeeinrichtung Elemente zur Führung der Drehbewegung bzw. zur Lagerung des drehbaren Teils der weiteren Aufnahmeeinrichtung umfassen.

Weiter ist es möglich, dass die erste Drehachse der weiteren Aufnahmeeinrichtung die Mittellinien der Aufnahmefächer in einem gemeinsamen Punkt, insbesondere dem vorhergehend erläuterten Mittelpunkt, schneidet.

Durch die Ausbildung der weiteren Aufnahmeeinrichtung mit einem drehbaren Teil ergibt sich in vorteilhafter Weise eine platzsparende Ausführung der weiteren Aufnahmeeinrichtung, die jedoch zuverlässig aus den Aufnahmefächern ausgeführte Dokumente aufnehmen kann.

In einer weiteren Ausführungsform ist die weitere Aufnahmeeinrichtung zusätzlich um eine weitere Drehachse drehbar. Die weitere Drehachse kann hierbei z.B. parallel zu der vorhergehend erläuterten Haupttransportrichtung orientiert sein. Auch kann die weitere Drehachse orthogonal zur ersten Drehachse der weiteren Aufnahmeeinrichtung orientiert sein.

Es ist vorstellbar, dass die weitere Aufnahmeeinrichtung eine Haltestruktur oder eine Halteeinrichtung für den um die erste Drehachse drehbaren Teil umfasst, wobei der drehbare Teil der Aufnahmeeinrichtung drehbar um die erste Drehachse an der Haltestruktur befestigt ist. Die Haltestruktur selbst kann dann wiederum um die weitere Drehachse drehbar sein.

Hierdurch erhöhen sich in vorteilhafter Weise die Freiheitsgrade bei dem Transport von Dokumentenkörpern, insbesondere zur Positionierung des Dokumentenkörpers in einer gewünschten Raumlage z.B. während eines Herstellungsschrittes, z.B. bei einer Laserbeschriftung.

In einer weiteren Ausführungsform umfasst die weitere Aufnahmeeinrichtung ein erstes Klemmelement und mindestens ein weiteres Klemmelement. Das erste und das weitere Klemmelement können hierbei Teile des um die erste Drehachse drehbaren Teils der weiteren Aufnahmeeinrichtung sein. Weiter ist zwischen den Klemmelementen zumindest oder ausschließlich ein Randabschnitt des Dokumentenkörpers klemmbar, insbesondere wenn der Dokumentenkörper in der Befestigungsanlage angeordnet ist. Der Randabschnitt kann insbesondere ein zumindest teilweise oder ein vollständig umlaufender Randabschnitt des Dokumentenkörpers sein. Das Klemmen kann zum Befestigen des Dokumentkörpers dienen.

Somit ist es möglich, mittels der Klemmelemente den Dokumentenkörper nur im Bereich eines Randes zu klemmen. Dies wiederum ermöglicht in vorteilhafter Weise, dass ein zentraler Bereich des Dokumentenkörpers auch im befestigten Zustand freigelegt bzw. frei zugänglich sein kann.

Die Klemmelemente können hierbei Befestigungselemente für den Dokumentenkörper ausbilden. Es ist möglich, dass die Klemmelemente über mindestens ein Federelement verbunden sind. Zum Befestigen des Dokumentenkörpers in, an oder auf der weiteren Aufnahmeeinrichtung können die Klemmelemente in einen Klemmzustand versetzt werden. Im Klemmzustand ist somit der Befestigungszustand gegeben. Im nicht geklemmten Zustand kann somit ein Freigabezustand gegeben sein.

Insbesondere können die Klemmelemente derart über Federelemente verbunden sein, dass sich die Klemmelemente ohne eine weitere, der Federkraft entgegenwirkenden Kraft, im Klemmzustand befinden. Somit kann es notwendig sein, eine weitere Kraft zu erzeugen und auf die Klemmelemente auszuüben, um diese in den Freigabezustand zu versetzen. Diese weitere Kraft kann z.B. pneumatisch erzeugt werden.

Durch die Ausbildung mit Klemmelementen kann insbesondere gewährleistet werden, dass ein zentraler Bereich des Dokumentenkörpers für einen Teilschritt des Herstellungsprozesses zugänglich ist. In dem Teilschritt kann insbesondere eine Laserbeschriftung durchgeführt werden. Selbstverständlich können jedoch auch andere Herstellungsschritte ausgeführt werden, wenn der Dokumentenkörper durch die Klemmelemente geklemmt ist.

In einer weiteren Ausführungsform umfasst zumindest ein Klemmelement zumindest einen Rahmenabschnitt oder ist als Rahmen ausgebildet. Vorzugsweise umfassen beide Klemmelemente einen Rahmenabschnitt oder sind als Rahmen ausgebildet. Ein Rahmen bezeichnet hierbei ein rahmenförmiges Bauteil.

Ein Rahmen kann hierbei eine Öffnung, insbesondere eine rechteckförmige Öffnung, aufweisen, die insbesondere als Durchgangsöffnung ausgebildet sein kann. Die Unter- bzw. Oberseiten der Klemmelemente können hierbei die Klemmflächen ausbilden. Durch die Öffnungen der als Rahmen oder als Rahmenabschnitt ausgebildeten Klemmelemente kann dann der zentrale Bereich des geklemmten Dokumentenkörpers zugänglich bzw. freigelegt sein.

Es ist weiter vorstellbar, dass jedes Klemmelement einen vollständig geschlossenen Rahmenabschnitt aufweist, der die Öffnung aufweist. Weiter kann ein Klemmelement einen U-profilförmigen Endabschnitt aufweist. Dieser U-profilförmige Endabschnitt kann als Einführ- oder Ausführabschnitt zum Ein- und Ausführen des Dokumentenkörpers dienen oder diesen umfassen.

In einem geklemmten Zustand ist durch die Durchgangsöffnung jeweils ein zentraler Bereich des geklemmten Dokumentenkörpers zugänglich, also freigelegt. Dies ermöglicht insbesondere die Laserbeschriftung des geklemmten Dokumentenkörpers. Weisen sowohl das erste und das weitere Klemmelement eine Durchgangsöffnung auf, so sind ein zentraler Bereich einer ersten Seite, z.B. einer Oberseite, und ein zentraler Bereich einer weiteren Seite, z.B. einer Rückseite, des Dokumentenkörpers freigelegt. Somit kann eine Laserbeschriftung sowohl im Bereich der ersten als auch der weiteren Seite erfolgen. Hierzu kann es jedoch notwendig sein, den Dokumentenkörper mittels der weiteren Aufnahmeeinrichtung in verschiedene Beschriftungslagen zu positionieren, insbesondere zu verdrehen.

Weiter kann die weitere Aufnahmeeinrichtung mindestens einen Betätigungsabschnitt zur Betätigung der Klemmelemente durch ein Betätigungselement aufweisen, wobei die Klemmelemente durch eine Betätigung von einer Klemmstellung in eine Freigabestellung bewegbar ist. Die Betätigung der Klemmelemente durch das Betätigungselement kann hierbei über ein Koppelelement erfolgen. Insbesondere der Betätigungsabschnitt ein Abschnitt zur Betätigung des Koppelelements durch das Betätigungselement sein, wobei das Koppelelements durch eine Betätigung von einer ersten Position in eine weitere Position bewegbar ist. Weiter kann das erste und das weitere Klemmelement derart gekoppelt sein, dass die Klemmelemente von einer Klemmstellung (Befestigungszustand) in eine Freigabestellung (Freigabezustand) bewegt werden, wenn das Koppelelement von der ersten Position in die weitere Position bewegt wird. Die Betätigung kann eine manuelle oder aktorgestützte Betätigung sein.

Weiter können das erste und das weitere Klemmelement derart gekoppelt sein, dass eine Bewegung der Klemmelemente von der Freigabestellung in die Klemmstellung freigegeben wird, wenn das Koppelelement von der weiteren Position in die erste Position bewegt wird. Ist diese Bewegung, die auch als Klemmbewegung bezeichnet werden kann, freigegeben, so können die Klemmelemente in die Klemmstellung versetzt werden. Diese Bewegung kann beispielsweise durch Federelemente bewirkt werden, die zwischen den Klemmelementen angeordnet sind. In diesem Fall kann die Klemmbewegung durch eine Bewegung des Koppelelements freigegeben werden.

Der Betätigungsabschnitt kann insbesondere derart angeordnet und/oder ausgebildet werden, dass dieser die Betätigung des Koppelelements durch das Betätigungselement ermöglicht, insbesondere eine reproduzierbare Betätigung. Bei der Betätigung kann eine Wechselwirkung zwischen dem Betätigungselement und dem Koppelelement, insbesondere eine Kraftübertragung von dem Betätigungselement auf das Koppelelement, erfolgen. Beispielsweise kann das Betätigungselement entlang einer Betätigungstrajektorie in den oder entlang des Betätigungsabschnitt(s) bewegt werden. Bei der Bewegung entlang der Betätigungstrajektorie, die auch als Betätigungsbewegung bezeichnet werden kann, entlang einer Betätigungsrichtung kann das Koppelelement durch das Betätigungselement betätigt werden.

Bei einer Bewegung entlang der Betätigungstrajektorie entgegen der Betätigungsrichtung kann das Betätigungselement aus dem oder ebenfalls entlang des Betätigungsabschnitt(s) bewegt werden. Bei dieser Bewegung kann eine Bewegung des Koppelelements von der Freigabeposition in die Klemmposition freigegeben oder aber auch bewirkt werden. Diese Bewegung kann dann aufgrund der vorhergehend erläuterten Federkräfte bewirkt werden, wodurch von dem weiteren Klemmelement eine Betätigungskraft auf das Koppelelement ausgeübt wird, die dann zur Bewegung von der Freigabeposition in die Klemmposition führt.

Der Betätigungsabschnitt kann an einer Längsseite des ersten Klemmelements und/oder an einer Längsseite des weiteren Klemmelements angeordnet sein. Weiter kann das Koppelelement einen ersten Betätigungsabschnitt zur Betätigung durch ein Betätigungselement aufweisen oder ausbilden, wobei das Koppelelement mindestens einen weiteren Betätigungsabschnitt zur Betätigung des weiteren Klemmelements aufweist oder ausbildet.

Weiter kann die vorgeschlagene Vorrichtung das Betätigungselement umfassen, insbesondere ein entlang einer linearen Betätigungstrajektorie bewegliches Betätigungselement. Weiter kann die Vorrichtung eine Halteeinrichtung für die Klemmelemente umfassen, wobei die Klemmelemente drehbar an der Halteeinrichtung gelagert sind. Weiter können die Klemmelemente derart an der Halteeinrichtung befestigt sein, dass eine durch den Betätigungsabschnitt festgelegte Betätigungstrajektorie konzentrisch zur Rotationsachse der Klemmelemente verläuft. Weiter kann die Vorrichtung mindestens eine Antriebseinrichtung für eine Drehbewegung der Klemmelemente und/oder eine Antriebseinrichtung für die Bewegung des Betätigungselements, insbesondere eine pneumatische Antriebseinrichtung umfassen.

Weiter kann das Betätigungselement zumindest einen sich verjüngenden Abschnitt aufweisen oder diesen ausbilden. Vorzugsweise ist dieser sich verjüngende Abschnitt an einem ersten Ende des Betätigungselements angeordnet, wobei dieses erste Ende ein entlang der Betätigungsrichtung vorderes Ende des Betätigungselements sein kann. Hierbei kann sich der verjüngende Abschnitt hin zum vorderen Ende verjüngen. Wird bei einer Betätigungsbewegung das Betätigungselement entlang der Betätigungstrajektorie bewegt und liegt eine Oberfläche des Koppelelements, insbesondere des ersten Betätigungsabschnitts, an der Oberfläche des sich verjüngenden Abschnitts an, so kann das Koppelelement aufgrund der Änderung des Durchmessers des Betätigungselements bei der Bewegung, der mit dem Koppelelement wechselwirkt, verschoben werden.

Hierdurch ergibt sich in vorteilhafter Weise, dass beim Drehen des Drehtisches das Anschlussmittel und somit die an das Anschlussmittel angeschlossenen Übertragungsmittel keinen großen Raumbereich zur Bewegung beanspruchen. Ist z.B. das Signal- und/oder Energieübertragungsmittel konzentrisch zur ersten Drehachse angeordnet, so führt ein solches Übertragungsmittel bei Rotation des drehbaren Teils ebenfalls nur eine Rotationsbewegung um die erste Drehachse aus und somit keine Kreisbewegung bzw. eine Kreisbewegung mit minimalem Radius.

Weiter kann die weitere Aufnahmeeinrichtung einen Einführabschnitt und einen Ausführabschnitt für einen Dokumentenkörper aufweisen, wobei der Einführabschnitt dem Ausführabschnitt entspricht. Der Ein- und Ausführabschnitt wurden vorhergehend bereits erläutert.

In der beschriebenen Ausführungsform jedoch kann ein Dokumentenkörper auf einer Seite eingeführt und auf der gleichen Seite wieder ausgeführt werden. Eine Ausführung auf der gegenüberliegenden Seite kann in diesem Fall nicht möglich sein.

Hierdurch ergibt sich in vorteilhafter Weise ein einfacher mechanischer Aufbau der weiteren Aufnahmeeinrichtung. Weiter kann der dem Ein- und Ausführabschnitt entlang der Einführrichtung gegenüberliegende Abschnitt der weiteren Aufnahmeeinrichtung als Anschlag für ein eingeführtes Dokument dienen. Durch diesen kann eine Bewegung des Dokuments bei der Einführung gestoppt werden. Wäre der Ausführabschnitt entlang der Einführrichtung der dem Einführabschnitt gegenüberliegende Abschnitt, so wäre zum Stoppen des Dokuments bei der Einführung ein zusätzliches Bauteil incl. Antrieb und Überwachung (Stopper) notwendig.

Es ist aber selbstverständlich auch möglich, dass der Einführabschnitt und der Ausführabschnitt auf gegenüberliegenden Seiten der weiteren Aufnahmeeinrichtung angeordnet sind. In diesem Fall kann ein Dokumentenkörper auf einer Seite eingeführt und auf der, insbesondere in Transportrichtung durch die weitere Aufnahmeeinrichtung, gegenüberliegenden Seite wieder ausgeführt werden.

In einer weiteren Ausführungsform umfasst die Vorrichtung mindestens eine Ausgabeeinrichtung. Die Ausgabeeinrichtung weist mindestens ein Ausgabefach auf oder bildet dieses aus. Weiter ist die weitere Aufnahmeeinrichtung in mindestens eine Ausgabelage bewegbar. Die Ausgabelage kann von allen Übergabelagen verschieden sein. Weiter kann die Ausgabelage dem Ausgabefach zugeordnet sein.

Weiter ist ein in, an oder auf der weiteren Aufnahmeeinrichtung angeordneter Dokumentenkörper in das Ausgabefach transportierbar, wenn sich die weitere Aufnahmeeinrichtung in der Ausgabelage befindet. Zum Transport des Dokumentenkörpers von der weiteren Aufnahmeeinrichtung in das Ausgabefach kann dieser entlang einer Ausführrichtung bewegt werden. Entlang der Ausführrichtung kann der Dokumentenkörper durch den Ausführabschnitt in das Ausgabefach der Ausgabeeinrichtung bewegt werden.

Eine Antriebskraft für diese Bewegung kann zumindest teilweise oder allein durch die Gravitationskraft erzeugt werden.

Dass der Dokumentenkörper zur weiteren Aufnahmeeinrichtung bewegt wird, kann bedeuten, dass der Dokumentenkörper aus der Befestigungslage in eine Aufnahmelage in dem Ausgabefach bewegt wird. Hierzu kann es selbstverständlich notwendig sein, die weitere Aufnahmeeinrichtung in den Freigabezustand zu versetzen. Die Bewegungsrichtung zum Transport des Dokumentenkörpers von der weiteren Aufnahmeeinrichtung zum Ausgabefach kann parallel zu einer zentralen Mittellinie des Ausgabefachs orientiert sein. Die Bewegungsrichtung kann insbesondere eine geradlinige Bewegung ermöglichen.

Auch bei dieser Bewegung kann keine Erzeugung einer zusätzlichen Antriebskraft, z.B. durch einen Aktor, notwendig sein.

Weiter ist es möglich, dass der Dokumentenkörper in eine festgelegte Ausgabelage in dem Ausgabefach angeordnet wird. Hierzu kann die Ausgabeeinrichtung entsprechende Aufnahmemittel aufweisen oder ausbilden. Beispielsweise kann die Ausgabeeinrichtung Führungsnuten zur Aufnahme von Randabschnitten des Dokumentenkörpers aufweisen. Diese können derart angeordnet und/oder ausgebildet sein, dass der Dokumentenkörper in der festgelegten Raumlage in dem Ausgabefach angeordnet wird.

Weiter kann das Ausgabefach drehbar sein. Somit kann die Ausgabeeinrichtung einen drehbaren Teil, insbesondere einen um mindestens eine Drehachse drehbaren Teil, umfassen, wobei der drehbare Teil das Ausgabefach aufweisen kann. Die Drehachse des drehbaren Teils der Ausgabeeinrichtung kann hierbei senkrecht zur vorhergehend erläuterten Haupttransportrichtung sein. Hierdurch ergibt sich in vorteilhafter Weise, dass ein im Ausgabefach angeordneter Dokumentenkörper umgeblättert werden kann.

Weiter beschrieben wird, dass ein Aufnahmefach der Dokumenten-Aufnahmeeinrichtung Führungsnuten zur Aufnahme von Randabschnitten eines Dokumentenkörpers aufweist. Diese können derart angeordnet und/oder ausgebildet sein, dass der Dokumentenkörper in einer vorbestimmten Raumlage angeordnet werden kann.

Hierdurch ergibt sich in vorteilhafter Weise, dass ein Dokumentenkörper in einem Aufnahmefach zuverlässig in einer vorbestimmten Raumlage angeordnet werden kann.

Weiter beschrieben wird eine Ausführungsform, wobei die Ausgabeeinrichtung mindestens zwei Aufnahmefächer auf oder bildet diese aus, wobei ein Aufnahmefach mindestens eine Einführöffnung aufweist, wobei die Aufnahmefächer der Ausgabeeinrichtung schräg zueinander orientiert sind. Ein Aufnahmefach der Ausgabeeinrichtung kann das vorhergehend erläuterte Ausgabefach sein. Die Ausgabeeinrichtung kann hierbei entsprechend der vorhergehend erläuterten Dokumenten-Aufnahmeeinrichtung ausgebildet sein. Somit können die Merkmale der Dokumenten-Aufnahmeeinrichtung auch durch die Ausgabeeinrichtung verwirklicht sein. Daher wird bezüglich der Ausbildung der Ausgabeeinrichtung auf die entsprechenden Offenbarungsstellen verwiesen.

Insbesondere weist ein Aufnahmefach eine Einführöffnung zur Einführung eines Dokumentenkörpers auf, insbesondere eines von der weiteren Aufnahmeeinrichtung eingeführten Dokumentenkörpers. Weiter kann das Aufnahmefach eine Ausführöffnung zum Ausführen des Dokumentenkörpers aufweisen. Insbesondere können die Einführöffnung und die Ausführöffnung an verschiedenen, insbesondere gegenüberliegenden, Enden des Aufnahmefachs angeordnet sein.

Weiter kann die Ausgabeeinrichtung mindestens ein Mittel zum Öffnen und Schließen der Ausführöffnung eines Aufnahmefachs aufweisen. Insbesondere können in den Aufnahmefächern der Ausgabeeinrichtung aufgenommene Dokumentenkörper einen vorbestimmten Winkel einschließen bzw. mit einem von Null verschiedenen Winkel zueinander angeordnet sein. Der Winkel kann in einem Winkelbereich von 0° (ausschließlich) bis 180° (ausschließlich) liegen. Die Ausgabeeinrichtung kann hierbei auch ebenfalls als Magazin, insbesondere als Rundmagazin oder Karussellmagazin, bezeichnet werden. Die Ausgabeeinrichtung kann hierbei ortsfest oder bewegbar angeordnet sein.

Dass die Aufnahmefächer der Ausgabeeinrichtung schräg zueinander orientiert sind, kann bedeuten, dass Mittellinien der Aufnahmefächer einen Winkel größer als 0° und vorzugsweise kleiner als 90° einschließen. Weiter ist es möglich, dass sich Mittellinien von mindestens zwei, vorzugsweise jedoch von allen, Aufnahmefächern in einem gemeinsamen Schnittpunkt schneiden. Hierbei können sich die Mittellinien unter dem festgelegten Winkel schneiden. Eine Mittellinie kann eine Symmetrieachse eines Aufnahmefachs sein. Weiter ist z.B. möglich, dass Mittelpunkte der Aufnahmefächer, insbesondere geometrische Mittelpunkte, entlang einer Kreissegmentlinie, entlang einer Ellipsensegmentlinie oder einer Polygonsegmentlinie angeordnet sind. Diese kann der Linie entsprechen, auf der auch die Mittelpunkte der Aufnahmefächer der Dokumenten-Aufnahmeeinrichtung angeordnet sein können.

In dem montierten Zustand kann die Ausgabeeinrichtung insbesondere derart angeordnet sein, z.B. an einer Trägereinrichtung oder an einer Tragstruktur befestigt sein, dass mindestens ein Anteil der Orientierung einer Mittellinie eines Aufnahmefachs parallel zur Vertikalrichtung bzw. zur Haupttransportrichtung orientiert ist. So können Dokumentenkörper in die Aufnahmefächer durch Wirkung der Schwerkraft eingeführt und, wenn gewünscht, aus den Aufnahmefächern ausgeführt werden.

Sind die Mittelpunkte der Aufnahmefächer entlang einer Linie, z.B. der vorhergehend erläuterten Kreissegmentlinie, angeordnet, so können diese festgelegte gleiche Abstände zueinander aufweisen, also äquidistant angeordnet sein. Es ist möglich, dass sich ein Querschnitt des Aufnahmefachs entlang einer Mittellinie des Aufnahmefachs in einer Richtung, die von der Einführöffnung zur Ausführöffnung orientiert ist, verbreitert, wobei die Querschnittsebene senkrecht zur Mittellinie orientiert ist.

Die Aufnahmefächer können somit entlang einer Umfangsrichtung des Teilabschnitts benachbart zueinander angeordnet sein. Die Mittellinien der Aufnahmefächer können sich in einem Punkt auf der Symmetrieachse des Hohlzylinders schneiden. Dieser Schnittpunkt kann dem Schnittpunkt der Mittellinien der Aufnahmefächer der Dokumenten-Aufnahmeeinrichtung entsprechen.

Die vorgeschlagene Vorrichtung ermöglicht in vorteilhafter Weise, dass mehrere Dokumentenkörper, insbesondere auch zeitgleich, in Aufnahmefächern der Ausgabeeinrichtung angeordnet werden können. Hierbei kann eine bestimmte Klasse von Dokumenten in einem der Aufnahmefächer angeordnet werden. Z.B. können als Ausschuss klassifizierte Dokumentenkörper in einem Ausschuss-Aufnahmefach angeordnet werden. Weiter können als "fehlerhaft" klassifizierte Dokumentenkörper in einem Fehler-Aufnahmefach angeordnet werden. Weiter können als "funktionsfähig" klassifizierte Dokumentenkörper in einem Fehlerfrei-Aufnahmefach angeordnet werden. Hierbei kann ein Dokumentenkörper in einem Prüfschritt als Ausschuss, als fehlerhaft oder als fehlerfrei klassifiziert werden.

Weiter ist es möglich, dass die Dokumentenkörper, die in einem oder in mehreren Aufnahmefächern der Ausgabeeinrichtung angeordnet sind, einem weiteren Prozessschritt zugeführt oder weiter transportiert werden, insbesondere durch eine Ausführöffnung.

Es ist auch möglich, dass die Ausgabeeinrichtung bewegbar, insbesondere rotierbar, ist. Insbesondere kann die Ausgabeeinrichtung um eine Rotationsachse rotierbar sein, die durch den erläuterten gemeinsamen Schnittpunkt der Mittellinien der Aufnahmefächer verläuft und senkrecht zu all diesen Mittellinien orientiert ist. Somit kann die Rotationsachse der Symmetrieachse des erläuterten Hohlzylinders entsprechen.

Es ist möglich, dass ein Herstellungsschritt zur Herstellung des Dokuments durchgeführt wird, wenn es in einem Aufnahmefach der Ausgabeeinrichtung angeordnet ist. Sind mehrere Aufnahmefächer vorhanden, so kann eine Herstellungszeit von mehreren Dokumenten verringert werden, da zeitlich parallel Herstellungsschritte für in mehreren Aufnahmefächern angeordnete Dokumentenkörper durchgeführt werden können.

Weiter kann das Mittel zum Öffnen und Schließen mindestens einen Pneumatikzylinder umfassen. Beispielsweise kann der Pneumatikzylinder derart angeordnet und/oder ausgebildet sein, dass in einem zumindest teilweise ausgefahrenen Zustand eines beweglichen Teils des Pneumatikzylinders sich die Ausführöffnung des entsprechenden Aufnahmefachs in dem geschlossenen Zustand befindet. In einem eingefahrenen, insbesondere vollständig eingefahrenen, Zustand kann sich die Ausführöffnung in dem geöffneten Zustand befinden. Hierbei kann zumindest ein Teil des Pneumatikzylinders in einem Gehäuse der Dokumenten-Aufnahmeeinrichtung angeordnet sein, insbesondere in dem Trennelement bzw. einem Hohlraum des Trennelements, welches zwischen zwei Aufnahmefächern angeordnet ist.

Zur Bereitstellung von Antriebsenergie für den Pneumatikzylinder können im Gehäuse ebenfalls entsprechende Versorgungsleitungen angeordnet sein.

Hierdurch ergibt sich in vorteilhafter Weise einfacher mechanischer Aufbau sowie bereits existierende Anschlüsse der vorgeschlagenen Vorrichtung zum Transport von Dokumentenkörpern auch für den Betrieb Dokumenten-Aufnahmeeinrichtung genutzt werden können.

In einer weiteren Ausführungsform umfasst die Vorrichtung mindestens eine Beleuchtungseinrichtung. Die Beleuchtungseinrichtung kann hierbei ortsfest, insbesondere relativ zur Vorrichtung, also in einem vorrichtungsfesten Koordinatensystem, angeordnet sein. Insbesondere kann die Beleuchtungseinrichtung auch ortsfest relativ zur Dokumenten-Aufnahmeeinrichtung angeordnet sein.

Die Beleuchtungseinrichtung kann hierbei insbesondere derart angeordnet und/oder ausgebildet sein, dass diese ein von der weiteren Aufnahmeeinrichtung aufgenommenen Dokumentenkörper beleuchtet, insbesondere mit gewünschten Beleuchtungsparametern.

Hierbei kann die Beleuchtungseinrichtung eine Auflichtbeleuchtung, eine Durchlichtbeleuchtung oder eine seitliche Beleuchtung des Dokumentenkörpers ermöglichen. Weiter kann die Beleuchtungseinrichtung die Beleuchtung mit einer gewünschten Intensität, einer gewünschten Wellenlänge und/oder eine gewünschten Dauer ermöglichen. Die oder eine Beleuchtungseinrichtung(en) kann als Ringleuchte ausgebildet sein. Umfasst, wie nachfolgend noch näher erläutert, die Vorrichtung insbesondere eine Bilderfassungseinrichtung, so kann die Ringleuchte z.B. ein Objektiv der Bilderfassungseinrichtung umfassen.

Die Beleuchtungseinrichtung dient hierbei z.B. zum Beleuchten des Dokumentenkörpers, um eine Abbildung des Dokumentenkörpers durch eine Bilderfassungseinrichtung mit einer gewünschten Bildqualität zu ermöglichen. Hierdurch können dokumentenkörperspezifische Informationen bildbasiert bestimmt werden. Auch kann eine Raumlage des Dokumentenkörpers bildbasiert bestimmt werden. Die bildbestimmten Informationen können dann zur Steuerung eines (Teilschritt eines) Herstellungsprozesses genutzt werden. Beispielsweise kann die bildbasiert bestimmte Raumlage genutzt werden, um eine Laserbeschriftung derart zu steuern, dass eine Beschriftung in einem gewünschten Raumbereich des Dokumentenkörpers und/oder mit einer gewünschten Einstrahlrichtung erfolgt..

Somit wird durch die Beleuchtungseinrichtung in vorteilhafter Weise ein verbesserter Herstellungsprozess mit einer verbesserten Herstellungsqualität ermöglicht.

In einer weiteren Ausführungsform umfasst die Vorrichtung mindestens eine Bilderfassungseinrichtung. Die Bilderfassungseinrichtung kann insbesondere als Kamera, beispielsweise als CCD-Kamera oder CMOS-Kamera ausgebildet sein. Die Bilderfassungseinrichtung kann hierbei insbesondere ortsfest, beispielsweise in dem vorrichtungsfesten Koordinatensystem, angeordnet sein. Auch kann die Bilderfassungseinrichtung ortsfest relativ zur Dokumenten-Aufnahmeeinrichtung angeordnet sein. Die Bilderfassungseinrichtung kann selbstverständlich mindestens ein Objektiv umfassen.

Weiter kann die Bilderfassungseinrichtung derart angeordnet sein, dass ein in, an oder auf der weiteren Aufnahmeeinrichtung, insbesondere in der Befestigungslage, angeordneter Dokumentenkörper oder ein Teilbereich davon durch die Bilderfassungseinrichtung abgebildet werden kann. Beispielsweise ist es vorstellbar, einen frei zugänglichen zentralen Bereich einer Oberfläche eines befestigten, insbesondere geklemmten, Dokumentenkörpers durch die Bilderfassungseinrichtung abzubilden.

Beispielsweise kann es notwendig sein, einen Dokumentenkörper mittels der weiteren Aufnahmeeinrichtung in einer Abbildungslage anzuordnen, wobei mittels der Bilderfassungseinrichtung ein Abbild des in der Erfassungslage angeordneten Dokumentenkörpers erzeugt wird. Die Abbildungslage kann hierbei von den Übergabelagen und/oder von der Ausgabelage verschieden sein.

Hierdurch ergibt sich in vorteilhafter Weise eine zuverlässige Erzeugung von Informationen, insbesondere zur Steuerung des Herstellungsprozesses und/oder zur Qualitätskontrolle.

In einer weiteren Ausführungsform weist die Dokumenten-Aufnahmeeinrichtung mindestens eine Antennenstruktur auf. Die Antennenstruktur kann hierbei insbesondere in einem Aufnahmefach der Aufnahmeeinrichtung oder der Ausgabeeinrichtung angeordnet sein. Insbesondere kann die Dokumentenaufnahmeeinrichtung pro Aufnahmefach jeweils eine Antennenstruktur aufweisen, wobei diese in dem jeweiligen Aufnahmefach angeordnet ist.

Die Antennenstruktur dient zur drahtlosen Signalübertragung von Signalen zwischen einer Signalübertragungseinrichtung eines Dokumentenkörpers und einer dokumentenkörperexternen Signalübertragungseinrichtung. Hierbei kann die Antennenstruktur Teil der dokumentenexternen Signalübertragungseinrichtung sein. Die Signalübertragung kann insbesondere von und zu einem Dokumentenkörper erfolgen, der in der Signalübertragungslage in einem Aufnahmefach angeordnet/positioniert ist.

Es ist möglich, dass die Antennenstruktur an einer Oberfläche eines Trennelements zwischen zwei benachbarten Aufnahmefächern anliegt. Auch kann die Antennenstruktur in einem Hohlraum des Trennelements angeordnet sein.

Es ist möglich, dass die Antennenstruktur in, an oder auf einer Leiterplatte angeordnet oder ausgebildet ist. Die Leiterplatte kann in diesem Fall in dem Aufnahmefach angeordnet sein. Auch kann die Leiterplatte in einem Hohlraum des Trennelements angeordnet sein oder das Trennelement zumindest teilweise ausbilden.

Weiter ist es möglich, dass die Antennenstruktur mit einem vorbestimmten Abstand und einer vorbestimmten Orientierung relativ zu einem Dokumentenkörper angeordnet ist, wobei der Dokumentenkörper in dem Aufnahmefach angeordnet ist, insbesondere in der Signalübertragungslage. Insbesondere kann die Antennenstruktur oder eine Hauptebene der Antennenstruktur parallel zu einer Oberfläche des aufgenommenen Dokumentenkörpers orientiert sein. Somit kann also eine Leiterplatte mit der Antennenstruktur parallel zu dem aufgenommenen Dokumentenkörper orientiert sein.

Die Antennenstruktur kann insbesondere der Signalübertragung von RFID-Signalen zwischen dem Dokumentenkörper und einer dokumentenexternen RFID-Einrichtung dienen. Somit ist es insbesondere möglich, Informationen von einem RFID-Chip des Dokumentenkörpers auszulesen oder Informationen darauf zu speichern.

Hierdurch ergibt sich in vorteilhafter Weise, dass die vorgeschlagene Vorrichtung zum Transport auch zur Herstellung von Dokumentenkörpern verwendet werden kann. Insbesondere ist es möglich, zur Herstellung Informationen mittels der Antennenstruktur zum Dokumentenkörper zu übertragen oder Informationen von dem Dokumentenkörper zu empfangen, wenn dieser in einem Aufnahmefach angeordnet ist, insbesondere in der festgelegten Raumlage.

Informationen oder Daten, die zum Dokumentenkörper übertragen werden, können beispielsweise Informationen oder dokumenteninhaberspezifische Informationen/Daten, biometrische Informationen/Daten oder weiteren Informationen/Daten sein. Informationen, die vom Dokumentenkörper empfangen werden, können beispielsweise dokumentenspezifische Informationen/Daten, z.B. Informationen über eine Seriennummer, sein. Auch können diese Informationen/Daten den Informationen/Daten entsprechen, die zum Dokumentenkörper übertragen werden. Diese Informationen oder Daten können insbesondere Informationen oder Daten sein, die zur Verifikation des herzustellenden Dokuments genutzt werden können.

Weiter kann die Dokumenten-Aufnahmeeinrichtung mindestens ein Mittel zur Aufnahme der Antennenstruktur aufweisen. Insbesondere kann das Mittel zur Aufnahme die Anordnung der Antennenstruktur in einem Aufnahmefach ermöglichen. Dies wurde vorhergehend erläutert. Beispielsweise kann das Mittel zur Aufnahme als Mittel zur Aufnahme einer Leiterplatte ausgebildet sein. So ist es z.B. vorstellbar, dass die Dokumenten-Aufnahmeeinrichtung weitere Schlitze oder Nuten zur Aufnahme von Randabschnitten einer Leiterplatte aufweist.

Hierbei können Nuten oder Schlitze parallel zu den Nuten oder Schlitzen zur Aufnahme des Dokumentenkörpers orientiert sein.

Dies ermöglicht in vorteilhafter Weise eine zuverlässige relative Positionierung von Dokumentenkörper und Antennenstruktur derart, dass eine zuverlässige Signalübertragung, insbesondere zu einem Dokumentenkörper in der Signalübertragungslage, ermöglicht wird.

Weiter kann die Dokumenten-Aufnahmeeinrichtung mindestens ein Schirmelement zur elektromagnetischen Schirmung benachbarter Aufnahmefächer umfassen. Das Schirmelement kann hierbei zwischen benachbarten Aufnahmefächern angeordnet sein. Es ist vorstellbar, dass das Schirmelement Teil eines Trennelements ist. Auch ist es vorstellbar, dass das vorhergehend erläuterte Trennelement einen Hohlraum umfasst oder ausbildet, in dem das mindestens eine Schirmelement angeordnet ist. Durch das Schirmelement wird eine Feldstärke des in einem Aufnahmefach erzeugten elektromagnetischen Felds im benachbarten Aufnahmefach im Vergleich zu einer Ausführung ohne Schirmelement verringert.

Das Schirmelement kann insbesondere als Blech und somit plattenförmig ausgebildet sein. Es ist möglich, dass die Dokumenten-Aufnahmeeinrichtung Aufnahmemittel zur Aufnahme des mindestens einen Schirmelements aufweist. Die Aufnahmemittel können beispielsweise ebenfalls als Schlitze oder Nuten ausgebildet sein.

Hierdurch wird in vorteilhafter Weise die Gefahr einer Störung einer insbesondere gleichzeitigen Signalübertragung von und zu Dokumentenkörpern, die in benachbarten Aufnahmefächern angeordnet sind, vermindert.

In einer weiteren Ausführungsform umfasst die Vorrichtung mindestens eine RFID-Einrichtung. Die RFID-Einrichtung kann zum Erzeugen und/oder Empfangen von RFID-Signalen ausgebildet sein. Beispielsweise kann die RFID-Einrichtung mindestens einen Mikrocontroller umfassen. Weiter ist die mindestens eine RFID-Einrichtung mit der mindestens einen Antennenstruktur signaltechnisch verbunden. Somit kann die RFID-Einrichtung zum Erzeugen von RFID-Signalen dienen, die dann mittels der Antennenstruktur ausgesendet werden. Auch können von der Antennenstruktur empfangene Signale von der RFID-Einrichtung ausgewertet werden.

Vorzugsweise umfasst die Vorrichtung pro Aufnahmefach eine RFID-Einrichtung.

Die Vorrichtung, insbesondere die Dokumenten-Aufnahmeeinrichtung, kann hierbei Signalübertragungsmittel zur signaltechnischen Verbindung der RFID-Einrichtung mit der Antennenstruktur umfassen. Diese können zumindest teilweise in dem Gehäuse der Dokumenten-Aufnahmeeinrichtung angeordnet sein. Insbesondere können die Verbindungsmittel als Signalleitungen ausgebildet sein.

Weiter ist es möglich, dass die RFID-Einrichtungen in oder an dem Gehäuse der Dokumenten-Aufnahmeeinrichtung angeordnet sind.

Hierdurch ergibt sich in vorteilhafter Weise eine platzsparende Ausbildung einer Vorrichtung zur Herstellung von Dokumenten, die die Vorrichtung zum Transport umfasst. Insbesondere ist es möglich, Informationen zwischen der RFID-Einrichtung der Vorrichtung und dem Dokumentenkörper, insbesondere einem RFID-Chip des Dokumentkörpers, zu übertragen, wenn der Dokumentenkörper in einem Aufnahmefach angeordnet ist. Sind in mehreren Aufnahmefächern Dokumentenkörper angeordnet, so kann diese Informationsübertragung zeitlich parallel erfolgen. Dies ermöglicht in vorteilhafter Weise ein zumindest zeitweise simultanes Herstellen von Dokumenten, da insbesondere zeitgleich Informationen zwischen Dokumentenkörpern und der Vorrichtung übertragen werden können.

In einer weiteren Ausführungsform umfasst die Vorrichtung mindestens einen Teil einer Lasereinrichtung. Die Lasereinrichtung kann insbesondere eine Einrichtung zur Laserbeschriftung sein.

Die Laserbeschriftung kann insbesondere der Einbringung von Informationen in ein Dokument dienen. Die Informationen können insbesondere individuelle Informationen sein, d.h. Informationen, die nur in einem Dokument einer Vielzahl gleichartiger Dokumente gespeichert sind.

Hierbei kann ein Laserstrahlung gesteuert auf einen Dokumentenkörper gerichtet und eine Wechselwirkung zwischen der Laserstrahlung und Bestandteilen des Dokumentenrohlings herbeigeführt werden, die zu einer permanenten Änderung führt, beispielsweise durch eine Pyrolyse eines Kunststoffmaterials, eine Ablation von Material des Dokumentrohlings, ein Auslösen einer chemischen Reaktion in dem Dokumentenrohling oder Ähnliches. Dies und entsprechende Vorteile sind beispielsweise in der EP 2 733 099 B1 erläutert.

Beispielsweise kann die Vorrichtung Übertragungsmittel zur Übertragung eines Lasersignals, insbesondere eines Laserpulses, umfassen. Der mindestens eine Teil der Lasereinrichtung kann hierbei ortsfest angeordnet sein, insbesondere in einem vorrichtungsfesten Referenzkoordinatensystem. Auch kann der mindestens eine Teil der Lasereinrichtung ortsfest relativ zur Dokumenten-Aufnahmeeinrichtung angeordnet sein.

Insbesondere kann der Teil der Lasereinrichtung derart angeordnet und/oder ausgebildet sein, dass ein Bestrahlungsbereich der Lasereinrichtung die Bestrahlung von in der Befestigungslage in, an oder auf der weiteren Aufnahmeeinrichtung angeordneten Dokumentenkörpern ermöglicht, insbesondere wenn der Dokumentenkörper durch die weitere Aufnahmeeinrichtung in einer Beschriftungslage angeordnet wird. Hierbei kann der Dokumentenkörper in mehreren voneinander verschiedenen Beschriftungslagen angeordnet werden. Alle oder ausgewählte Beschriftungslagen können von den Übergabelagen und/oder der Ausgabelage und/oder der Abbildungslage verschieden sein.

Mit anderen Worten kann mittels der Lasereinrichtung ein in, auf oder an der weiteren Aufnahmeeinrichtung befestigter Dokumentenkörper beschriftet werden. Somit kann der Bestrahlungsbereich zumindest einen drehbaren Teil der weiteren Aufnahmeeinrichtung umfassen.

Die Lasereinrichtung kann hierbei auch Mittel zur Strahlführung, insbesondere zur Strahllenkung, eines Laserstrahls umfassen. Die Mittel können z.B. als in ihrer Raumlage änderbare Spiegel, beispielsweise als Kipp-Spiegel ausgebildet sein.

Alternativ oder kumulativ umfasst die Vorrichtung mindestens einen Teil einer Druckeinrichtung. Die Druckeinrichtung kann insbesondere derart ausgebildet und/oder angeordnet sein, dass der Dokumentenkörper durch die Druckeinrichtung bedruckbar ist. Die Druckeinrichtung kann insbesondere ein Inkjet-Drucker sein. Insbesondere kann, entsprechend den Ausführungen zur Lasereinrichtung, die Druckeinrichtung derart ausgebildet und/oder angeordnet sein, dass ein in, auf oder an der weiteren Aufnahmeeinrichtung befestigter Dokumentenkörper bedruckt werden kann.

Hierdurch ergibt sich in vorteilhafter Weise eine platzsparende Vorrichtung zur Herstellung von Dokumenten.

Es kann notwendig sein, dass ein Dokumentenkörper, der in, an oder auf der weiteren Aufnahmeeinrichtung befestigt ist, während der Laserbeschriftung in verschiedene Raumlagen, also in verschiedene Beschriftungslagen, positioniert wird. Insbesondere kann der Dokumentenkörper um die erste und/oder die weitere Drehachse verdreht werden. Hierdurch kann in vorteilhafter Weise eine Laserbeschriftung mit verschiedenen Einfallswinkeln durchgeführt werden, die wiederum zur Herstellung gewünschter Informationen notwendig sein kann.

Es ist weiter möglich, die weitere Aufnahmeeinrichtung zur Kalibrierung der Lasereinrichtung zu nutzen, insbesondere also zum Ermitteln von Betriebsparametern der Lasereinrichtung. Hierzu kann beispielsweise ein Kalibrierkörper, insbesondere eine Kalibrierkarte, in, an oder auf der weiteren Aufnahmeeinrichtung befestigt und von der Lasereinrichtung mit einstellbaren Betriebsparametern bestrahlt werden. Weiter kann der Kalibrierkörper durch die weitere Aufnahmeeinrichtung in einer gewünschten Raumlage positioniert werden, also in einer gewünschten Position und Orientierung. Betriebsparameter können beispielsweise eine Intensität, eine Orientierung, eine Zeitdauer etc. sein. Weiter kann, insbesondere bildbasiert, bestimmt werden, welche Betriebsparameter der Lasereinrichtung zum Erreichen eines gewünschten Bestrahlungsergebnis in der Raumlage eingestellt werden müssen. Hierzu kann beispielsweise die Bilderfassungseinrichtung mindestens ein Abbild des bestrahlten Kalibrierkörpers erzeugen. Durch eine solche Kalibrierung können Positionierfehler der weiteren Aufnahmeeinrichtung und/oder Fehler der Lasereinrichtung, die sich auf das gewünschte Bestrahlungsergebnis auswirken, minimiert werden.

Es ist möglich, dass die Vorrichtung mindestens eine Steuer- und Auswerteeinrichtung umfasst. Mittels der mindestens einen Steuer- und Auswerteeinrichtung kann insbesondere der Transport von Dokumentenkörpern gesteuert werden. Somit kann die Steuer- und Auswerteeinrichtung einen Betrieb der vorhergehend erläuterten Einrichtung zur Einführung von Dokumentenkörpern steuern. Weiter kann die mindestens eine Steuer- und Auswerteeinrichtung die Mittel zum Öffnen und Schließen der Ausführöffnungen der Aufnahmefächer steuern. Weiter kann die mindestens eine Steuer- und Auswerteeinrichtung einen Betrieb der weiteren Aufnahmeeinrichtung, insbesondere eine Bewegung der weiteren Aufnahmeeinrichtung, und eine Einstellung des Zustandes (Befestigungszustand, Freigabezustand) steuern. Weiter kann die mindestens eine Steuer- und Auswerteeinrichtungen einen Betrieb der Ausgabeeinrichtung, insbesondere ein Verdrehen des Ausgabefachs, steuern. Weiter kann auch ein Betrieb der mindestens einen Beleuchtungseinrichtung und/oder ein Betrieb der mindestens einen Bilderfassungseinrichtung gesteuert werden.

Weiter kann mittels der mindestens einen Steuer- und Auswerteeinrichtung eine Herstellung eines Dokuments gesteuert werden. Insbesondere kann ein Betrieb der mindestens einen RFID-Einrichtung und/oder einen Betrieb der mindestens einen Beleuchtungseinrichtung und/oder einen Betrieb der mindestens einen Bilderfassungseinrichtung und/oder einen Betrieb der mindestens einen Lasereinrichtung steuern. Auch kann die mindestens eine Steuer- und Auswerteeinrichtung eine Auswertung von Abbildern durchführen, die von der Bilderfassungseinrichtung erzeugt wurden.

Die mindestens eine Steuer- und Auswerteeinrichtung kann hierbei mindestens einen Mikrocontroller umfassen oder als solcher ausgebildet sein. Selbstverständlich kann die mindestens eine Steuer- und Auswerteeinrichtung auch durch mehrere Mikrocontroller ausgebildet sein. Die Steuer- und Auswerteeinrichtung kann hierbei daten- und/oder signaltechnisch mit den erläuterten Einrichtungen verbunden sein.

Weiter kann die Vorrichtung mindestens eine Absaugeinrichtung zur Absaugung von Luft und/oder Schadstoffen aus dem Bereich der weiteren Aufnahmeeinrichtung umfassen. Insbesondere kann die Dokumenten-Aufnahmeeinrichtung (Durchgangs-)Öffnungen aufweisen, die zur Absaugung von Luft dienen können. Hierdurch kann in vorteilhafter Weise Schmauch abgesaugt werden, der beim Laserbeschriften entstehen kann. Weiter kann die Vorrichtung eine Pumpeinrichtung zur Erzeugung von Unterdruck umfassen.

Hierdurch ergibt sich in vorteilhafter Weise, dass Schmauch aus dem Bereich der weiteren Aufnahmeeinrichtung abgesaugt werden kann.

Es ist möglich, dass einige oder alle der nachfolgend angeführten Elemente der vorgeschlagenen Vorrichtung, insbesondere deren Mittel- oder Referenzpunkte, entlang einer Kreissegmentlinie, entlang einer gemeinsamen Ellipsensegmentlinie oder einer gemeinsamen Polygonsegmentlinie angeordnet sind: Aufnahmefächer der Dokumenten-Aufnahmeeinrichtung, RFID-Einrichtung, Beleuchtungseinrichtung, Bilderfassungseinrichtung, Lasereinrichtung, Druckeinrichtung, Steuer- und Auswerteeinrichtung, Aufnahmefächer der Ausgabeeinrichtung. Mit anderen Worten können einige oder alle der angeführten Elemente der vorgeschlagenen Vorrichtung konzentrisch angeordnet sein.

Sind zumindest die Aufnahmefächer der Dokumenten-Aufnahmeeinrichtung entlang einer gemeinsamen Kreis-, Ellipsen- oder Polygonsegmentlinie angeordnet, so kann alternativ oder kumulativ zur der Anordnung entlang der gemeinsamen Linie auch eine optische Achse oder Hauptbestrahlungsrichtung der Beleuchtungseinrichtung und/oder eine Haupt-Lese-/Schreibrichtung der RFID-Einrichtung und/oder eine optische Achse der Bilderfassungseinrichtung und/oder eine optische Achse oder Hauptbestrahlungsrichtung der Lasereinrichtung senkrecht zur der gemeinsamen Linie orientiert sein. Dies kann auch als Radialanordnung bezeichnet werden.

Weiter vorgeschlagen wird ein Verfahren zum Transport von Dokumentenkörpern mittels einer Vorrichtung gemäß einer der in dieser Offenbarung erläuterten Ausführungsformen. Somit ist die Vorrichtung derart ausgebildet, dass das Verfahren zum Transport von Dokumentenkörpern gemäß einer der in dieser Offenbarung erläuterten Ausführungsformen mittels der Vorrichtung ausführbar ist. Das Verfahren zum Transport von Dokumentenkörpern kann hierbei zur Herstellung von Dokumenten dienen und insbesondere während eines Teils der Herstellung angeführt werden. Insbesondere ist es möglich, mittels des Verfahrens zum Transport die Dokumentenkörper in verschiedene Raumlagen zu transportieren, um verschiedene Herstellungsschritte oder Teile davon durchzuführen.

In dem Verfahren kann ein Dokumentenkörper in mindestens einem Aufnahmefach angeordnet werden. Weiterwird die Ausführöffnung des mindestens einen Aufnahmefaches geöffnet.

Hierdurch kann ein in dem Aufnahmefach angeordneter Dokumentenkörper aus dem Aufnahmefach ausgeführt werden. Die Bewegung zur Ausführung kann insbesondere zumindest teilweise oder allein durch die Gravitationskraft bewirkt werden. Selbstverständlich ist es jedoch auch möglich und vorstellbar, zusätzlich oder alternativ zur Gravitationskraft eine weitere Antriebskraft auf den im Aufnahmefach angeordneten Dokumentenkörper auszuüben, um diesen aus dem geöffneten Aufnahmefach auszuführen. Diese Antriebskraft kann insbesondere mechanisch auf den Dokumentenkörper übertragen werden. Selbstverständlich sind jedoch auch andere Übertragungsverfahren, z.B. magnetische Übertragungsverfahren, vorstellbar.

Zur Durchführung des Verfahrens kann es somit notwendig sein, zumindest die Dokumenten-Aufnahmeeinrichtung derart anzuordnen, dass eine Mittellinie eines jeden Aufnahmefaches zumindest einen Anteil aufweist, der parallel zu einer Gravitationsrichtung orientiert ist. Es ist insbesondere vorstellbar, die Dokumenten-Aufnahmeeinrichtung entsprechend an einer Tragstruktur zu befestigen.

In dem Verfahren kann jeweils nur eine Ausführöffnung eines von mehreren Aufnahmefächern zur gleichen Zeit geöffnet sein. Somit können verschiedene Ausführöffnungen sequentiell geöffnet werden. Hierdurch wird in vorteilhafter Weise verhindert, dass mehrere Dokumentenkörper gleichzeitig ausgeführt werden.

Wie nachfolgend noch näher erläutert, ist es vorstellbar, jede der Ausführöffnungen mit einer vorbestimmten Taktrate zu öffnen und zu schließen. Hierbei können jedoch geöffnete und geschlossene Zustände der Ausführöffnungen der einzelnen Aufnahmefächer zeitlich versetzt zueinander eingestellt werden, insbesondere derart, dass jeweils nur die Ausführöffnung eines Aufnahmefachs geöffnet ist.

In einer weiteren Ausführungsform wird die weitere Aufnahmeeinrichtung in eine dem Aufnahmefach zugeordnete Übergabelage bewegt, wobei die Ausführöffnung geöffnet wird, wenn sich die weitere Aufnahmeeinrichtung in dieser Übergabelage befindet. Hierdurch wird in vorteilhafter Weise sichergestellt, dass ein Dokumentenkörper, der durch die Ausführöffnung aus dem Aufnahmefach ausgeführt wird, zur weiteren Aufnahmeeinrichtung, insbesondere in eine Befestigungslage, in, auf oder an der weiteren Aufnahmeeinrichtung, transportiert wird. Auch dieser Transport kann, wie vorhergehend erläutert, durch die Gravitationskraft bedingt werden.

Somit kann eine Ausführöffnung erst dann geöffnet werden, wenn sichergestellt ist, dass das auszuführende Dokument in, auf oder an die weitere Aufnahmeeinrichtung transportiert werden kann.

Die weitere Aufnahmeeinrichtung kann hierbei dem weiteren Transport des Dokumentenkörpers dienen, insbesondere dem weiteren Transport bzw. Positionierung zur Durchführung weiterer Herstellungs(teil)schritte.

In einer weiteren Ausführungsform wird die weitere Aufnahmeeinrichtung in einen Befestigungszustand versetzt, wenn sich der Dokumentenkörper in der Befestigungslage befindet. Dies und entsprechende Vorteile wurden vorhergehend erläutert. Somit kann sich die weitere Aufnahmeeinrichtung in einem Freigabezustand befinden, bis der Dokumentenkörper in der Befestigungslage angeordnet ist. Hiernach kann die Aufnahmeeinrichtung in den Befestigungszustand versetzt werden, um den Dokumentenkörper in verschiedene Raumlagen zu transportieren.

In einer weiteren Ausführungsform wird die weitere Aufnahmeeinrichtung im Befestigungszustand in verschiedene Raumlagen bewegt. Beispielsweise kann die weitere Aufnahmeeinrichtung in eine Erfassungslage und/oder in eine oder mehrere Beschriftungslage(n) bewegt werden. Dies wurde vorhergehend bereits erläutert. Hierzu kann die Aufnahmeeinrichtung um mindestens eine, vorzugsweise jedoch um zwei, Drehachsen verdreht werden.

Beispielsweise ist es vorstellbar, die weitere Aufnahmeeinrichtung im Befestigungszustand in eine Erfassungslage zu bewegen, wobei in der Erfassungslage ein Abbild von zumindest einem Teil des Dokumentenkörpers, der in, an oder auf der Aufnahmeeinrichtung angeordnet ist, erzeugt wird. Nach der Erzeugung des Abbilds kann die weitere Aufnahmeeinrichtung in eine oder mehrere Beschriftungslagen bewegt werden, wobei in einer Beschriftungslage ein Lasersignal erzeugt und auf zumindest einen Teilbereich des Dokumentenkörpers gestrahlt wird.

Eine Veränderung der Einstrahlrichtung und/oder -position des Laserstrahls auf einer Oberfläche des Dokumentenkörpers kann verändert werden, indem entweder die Richtung des Laserstrahls verändert wird, beispielsweise durch ein geeignetes Mittel zur Strahllenkung, und/oder die Raumlage des Dokumentenkörpers verändert wird, beispielsweise durch Bewegen der weiteren Aufnahmeeinrichtung.

Es ist z.B. vorstellbar, dass die weitere Aufnahmeeinrichtung zur Beschriftung eines ersten Teilbereichs des Dokumentenkörpers in einer ersten Beschriftungslage positioniert wird und zur Beschriftung mindestens eines weiteren Teilbereichs in einer weiteren, von der ersten verschiedenen, Beschriftungslage positioniert wird.

Somit können zur Laserbeschriftung verschiedene Raumlagen der weiteren Aufnahmeeinrichtung eingestellt werden.

Hierdurch ergibt sich in vorteilhafter Weise eine hohe Flexibilität bei der Durchführung von Verfahrens(teil)schritten zur Herstellung von Dokumenten.

In einer weiteren Ausführungsform wird ein Abbild zumindest eines Teils des Dokumentenkörpers erzeugt. Insbesondere kann ein Abbild von einem zentralen Bereich einer Oberfläche des Dokumentenkörpers erzeugt werden. Auch ist es möglich, in einer ersten Erfassungslage ein Abbild eines zentralen Bereichs einer Vorderseite (erste Oberseite) des Dokumentenkörpers zu erzeugen, wobei in einer weiteren Erfassungslage ein Abbild zumindest eines Teils einer Rückseite (weitere Oberseite) des Dokumentenkörpers erzeugt werden kann. In diesem Fall kann beispielsweise die Aufnahmeeinrichtung um 180° um die erste Drehachse verdreht werden, um von der ersten Erfassungslage in die weitere Erfassungslage bewegt zu werden.

Alternativ oder kumulativ kann zumindest ein Teil des Dokumentenkörpers beleuchtet werden. Hierzu kann beispielsweise eine oder mehrere Beleuchtungseinrichtung(en) aktiviert werden. Dies kann insbesondere vor, während oder nach der Bilderfassung erfolgen.

Weiter alternativ oder kumulativ kann eine Laserbeschriftung durchgeführt werden. Hierdurch können, wie vorhergehend erläutert, Information in dem Dokumentenkörper eingebracht werden. Hierzu kann eine Lasereinrichtung entsprechend gesteuert werden. Insbesondere kann eine Intensität eines erzeugten oder ausgestrahlten Lasersignals eingestellt werden. Auch kann eine Strahlrichtung des Laserstrahls eingestellt werden. Zur Laserbeschriftung kann die Aufnahmeeinrichtung mit einem daran befestigten Dokumentenkörper wie vorhergehend erläutert in mindestens eine Beschriftungslage bewegt werden.

Weiter ist es möglich, dass in einem Verifikationsschritt ein von der Dokumenten-Aufnahmeeinrichtung und/oder von weiteren Aufnahmeeinrichtung und/oder von der Ausgabeeinrichtung aufgenommener Dokumentenkörper verifiziert wird. Dies kann z.B. erfolgen, wenn von dem Dokumentenkörper bereitgestellte Informationen mit vorbestimmten Informationen übereinstimmen. Die vom Dokumentenkörper bereitgestellten Informationen können z.B. bildbasiert bestimmt werden, insbesondere mittels der Bilderfassungseinrichtung. Auch können Informationen ausgelesen werden, z.B. drahtlos, insbesondere mittels der RFID-Leseeinrichtung.

Weiter ist es möglich, dass in einem Prüfschritt ein von der Dokumenten-Aufnahmeeinrichtung und/oder von weiteren Aufnahmeeinrichtung und/oder von der Ausgabeeinrichtung aufgenommener Dokumentenkörper geprüft wird, insbesondere qualitätsgeprüft wird. Dies kann z.B. erfolgen, wenn von dem Dokumentenkörper bereitgestellte Eigenschaften mit vorbestimmten Eigenschaften übereinstimmen. Die vom Dokumentenkörper bereitgestellten Eigenschaften können z.B. bildbasiert bestimmt werden, insbesondere mittels der Bilderfassungseinrichtung. Auch können Eigenschaften ausgelesen werden, z.B. drahtlos, insbesondere mittels der RFID-Leseeinrichtung.

Weiter ist es möglich, dass in einem Personalisierungsschritt ein von der Dokumenten-Aufnahmeeinrichtung und/oder von weiteren Aufnahmeeinrichtung und/oder von der Ausgabeeinrichtung aufgenommener Dokumentenkörper personalisiert wird. Dies kann z.B. erfolgen, indem vorbestimmte Personalisierungsinformationen in oder auf den Dokumentenkörper eingebracht bzw. aufgebracht werden. Diese Informationen können z.B. laserbasiert ein- oder aufgebracht werden, insbesondere mittels der Lasereinrichtung. Auch können solche Informationen übertragen werden, z.B. drahtlos, insbesondere mittels der RFID-Leseeinrichtung.

In einer weiteren Ausführungsform wird die weitere Aufnahmeeinrichtung in eine Ausgabelage bewegt, wobei die weitere Aufnahmeeinrichtung in der Ausgabelage in einen Freigabezustand versetzt wird. In diesem Fall kann der Dokumentenkörper der weiteren Aufnahmeeinrichtung in ein Aufnahmefach der Ausgabeeinrichtung transportiert werden. Dieser Transport kann wiederum zumindest teilweise oder vollständig durch Gravitationskraft bewirkt werden. Insbesondere kann die weitere Aufnahmeeinrichtung nach vollständiger Laserbeschriftung in die Ausgabelage bewegt und dann in den Freigabezustand versetzt werden.

Befindet sich der Dokumentenkörper in dem Ausgabefach der Ausgabeeinrichtung, so kann das Ausgabefach bzw. der dem Ausgabefach angeordnete Dokumentenkörper verdreht werden.

Hierdurch kann in vorteilhafter Weise eine gewünschte Orientierung zur Durchführung weiterer Herstellungs(teil)schritte eingestellt werden.

In einer weiteren Ausführungsform werden Informationen zwischen einem Dokumentenkörper und einer dokumentenkörperexternen Einrichtung übertragen, wenn der Dokumentenkörper in einem Aufnahmefach angeordnet ist. Die Übertragung kann insbesondere eine drahtlose Signalübertragung sein. Insbesondere können Informationen zwischen einer Signalübertragungseinrichtung eines Dokumentenkörpers und einer Signalübertragungseinrichtung außerhalb des Dokumentenkörpers übertragen werden. Die Signalübertragungseinrichtungen können insbesondere RFID-Einrichtungen sein.

Hierdurch ergibt sich in vorteilhafter Weise, dass in den Aufnahmefächern angeordnete Dokumentenkörper personalisiert und/oder individualisiert werden können. Selbstverständlich können jedoch auch einfach nur Informationen vom Dokumentenkörper ausgelesen oder auf dem Dokumentenkörper gespeichert werden.

Weiter können die Dokumentenkörper mit einer vorbestimmten Taktrate in die Aufnahmefächer eingeführt und aus den Aufnahmefächern ausgeführt werden. Die Taktrate kann insbesondere abhängig von einer Zeitdauer sein, die zum Übertragen gewünschter Informationen und/oder zum Laserbeschriften notwendig ist. Somit kann die Ausführungsöffnung mit einer fachspezifischen Taktrate geöffnet oder geschlossen werden. Die verschiedenen fachspezifischen Taktraten können gleich sein, jedoch einen Phasenversatz zueinander aufweisen.

Die vorgeschlagene Vorrichtung und das vorgeschlagene Verfahren ermöglichen in vorteilhafter Weise eine Parallelisierung von Herstellungs(teil)schritten mit unterschiedlicher Dauer. So kann eine Zeitdauer zur Übertragung gewünschter Informationen länger sein als die Zeitdauer für eine Laserbeschriftung. Beispielsweise kann die Zeitdauer zur Informationsübertragung 1 min und die Zeitdauer zur Laserbeschriftung 30 s betragen.

Mittels der Vorrichtung ist es beispielsweise möglich, dass eine Informationsübertragung für mehrere Dokumentenkörper zumindest zeitweise simultan durchgeführt wird. Weiter kann simultan zur Informationsübertragung eine Laserbeschriftung an, in oder auf der weiteren Aufnahmeeinrichtung des befestigten Dokumentenkörpers erfolgen.

Weiter kann ein Dokumentenkörper, für den die Informationsübertragung abgeschlossen ist, aus dem entsprechenden Aufnahmefach ausgeführt und zur weiteren Aufnahmeeinrichtung transportiert werden. Zeitgleich kann jedoch eine Informationsübertragung zu Dokumentenkörpern erfolgen, die in den verbleibenden Aufnahmefächern angeordnet sind. Somit wird in vorteilhafter Weise gewährleistet, dass nicht die längere Zeitdauer der Informationsübertragung, sondern die kürzere Zeitdauer der Laserbeschriftung die minimal erforderliche Zeit zur Herstellung eines Dokumentenkörpers beeinflusst.

Auch die Einführung in die Aufnahmefächer kann mit einer vorbestimmten Taktrate erfolgen. Hierbei können die Dokumentenkörper zeitlich nacheinander in verschiedene Aufnahmefächer eingeführt werden.

Weiter vorgeschlagen wird eine Vorrichtung zur Herstellung eines Wert- und/oder Sicherheitsdokuments, wobei die Vorrichtung eine Vorrichtung zum Transport gemäß einer der in dieser Offenbarung erläuterten Ausführungsformen umfasst. Weiter weist ein Aufnahmefach einer Dokumenten-Aufnahmeeinrichtung mindestens eine Antennenstruktur auf. Die Antennenstruktur dient insbesondere der in dieser Offenbarung erläuterten Signalübertragung und somit auch der Einbringung von Informationen in den Dokumentenkörper. Dieses Einbringen von Informationen kann hierbei Teil der Herstellung des Wert- und/oder Sicherheitsdokuments sein. Die Vorrichtung zur Herstellung kann weiter insbesondere, aber nicht ausschließlich, mindestens eine RFID-Einrichtung, mindestens eine Beleuchtungseinrichtung, mindestens eine Bilderfassungseinrichtung und/oder mindestens eine Lasereinrichtung umfassen. Insbesondere die RFID-Einrichtung und die Lasereinrichtung können zur Einbringung von Informationen in den Dokumentenkörper dienen. Die Beleuchtungs- und Bilderfassungseinrichtung können einer Steuerung des Herstellungsprozesses, z.B. einer Steuerung der Laserbeschriftung, dienen. Weiter kann die Vorrichtung zur Herstellung mindestens eine Steuer- und Auswerteeinrichtung umfassen.

Durch die Vorrichtung zum Transport ist also der Dokumentenkörper in verschiedene Raumlagen transportierbar, wobei in den jeweiligen Raumlagen ein Herstellungsschritt oder ein entsprechender Vorbereitungsschritt durchgeführt werden kann.

Weiter vorgeschlagen wird ein Verfahren zur Herstellung eines Wert- und/oder Sicherheitsdokuments mittels einer Vorrichtung zur Herstellung gemäß einer der in dieser Offenbarung erläuterten Ausführungsform. Somit ist die Vorrichtung derart ausgebildet, dass das Verfahren zur Herstellung von Dokumentenkörpern gemäß einer der in dieser Offenbarung erläuterten Ausführungsformen mittels der Vorrichtung ausführbar ist. In dem Verfahren werden Informationen zwischen einem Dokumentenkörper und einer dokumentenkörperexternen Einrichtung übertragen, wenn der Dokumentenkörper in einem Aufnahmefach angeordnet ist. Weiter kann in dem Verfahren eine Laserbeschriftung erfolgen, wenn der Dokumentenkörper in einer Beschriftungslage angeordnet ist. Selbstverständlich können auch noch weitere, insbesondere der vorhergehend erläuterten Verfahrensschritte, durchgeführt werden.

Die Erfindung wird anhand von Ausführungsbeispielen näher erläutert. Die Figuren zeigen:
- Fig. 1: einen schematischen Querschnitt durch eine erfindungsgemäße Vorrichtung,
- Fig. 1a: eine schematische Draufsicht auf die in Fig. 1 dargestellte Vorrichtung,
- Fig. 2: eine schematische Ansicht einer erfindungsgemäßen Vorrichtung in einer weiteren Ausführungsform,
- Fig. 3: eine weitere schematische Darstellung einer erfindungsgemäßen Vorrichtung in einer weiteren Ausführungsform,
- Fig. 4: ein schematisches Flussdiagramm eines erfindungsgemäßen Verfahrens,
- Fig. 5: eine schematische Ansicht einer erfindungsgemäßen Vorrichtung in einer weiteren Ausführungsform und
- Fig. 6: eine weitere schematische Darstellung einer erfindungsgemäßen Vorrichtung in einer weiteren Ausführungsform.

Nachfolgend bezeichnen gleiche Bezugszeichen Elemente mit gleichen oder ähnlichen technischen Merkmalen.

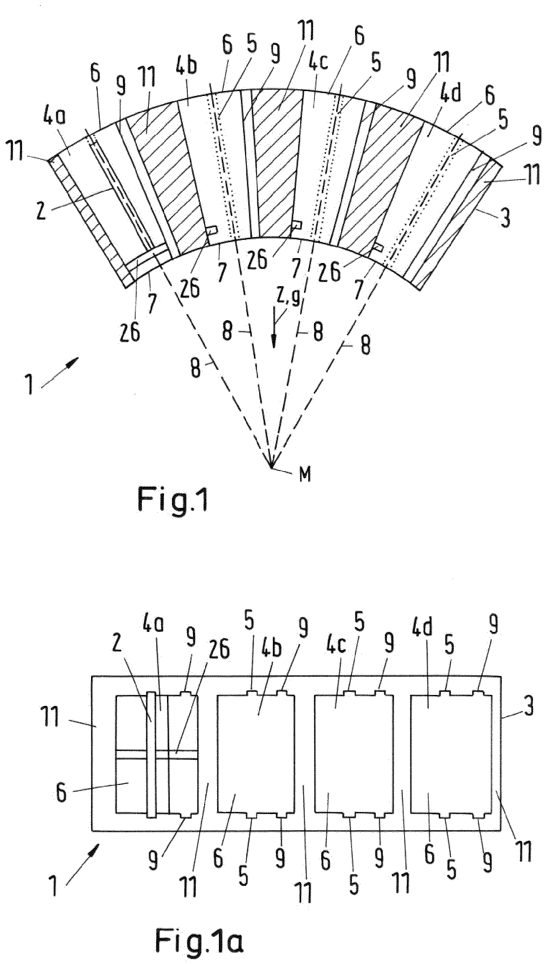

In Fig. 1 ist eine schematische Darstellung einer erfindungsgemäßen Vorrichtung 1 zum Transport von Dokumentenkörpern 2 dargestellt, wobei der Übersichtlichkeit halber nur ein Dokumentenkörper 2 dargestellt ist. Die Vorrichtung 1 umfasst eine Dokumenten-Aufnahmeeinrichtung 3, wobei die Dokumenten-Aufnahmeeinrichtung 3 vier Aufnahmefächer 4a, 4b, 4c, 4d aufweist. Die Aufnahmefächer 4a, 4b, 4c, 4d dienen zur Aufnahme von Dokumentenkörpern 2. Hierbei können die Aufnahmefächer 4a, 4b, 4d, 4c Aufnahmeschlitze 5 zur Aufnahme von Randbereichen der Dokumentenkörper 2 aufweisen. Die Aufnahmeschlitze 5 sind hierbei derart angeordnet und ausgebildet, dass der Dokumentenkörper 2 mit einer gewünschten Raumlage in dem Aufnahmefach 4a, ..., 4d angeordnet wird und dessen Randbereiche sich in die Aufnahmeschlitze 5 erstrecken.

Jedes Aufnahmefach 4a, ..., 4d weist eine Einführöffnung 6 und eine Ausführöffnung 7 auf. Die Ausführöffnungen 7 sind verschließbar. In Fig. 1 schematisch dargestellt sind Mittel 26 zum Öffnen und Schließen einer Ausführöffnung 7.

Weiter dargestellt ist eine Haupttransportrichtung z, wobei die Haupttransportrichtung parallel zu einer Gravitationskraft und in deren Richtung orientiert ist. Somit ist die Dokumenten-Aufnahmeeinrichtung 3 derart angeordnet, dass die Haupttransportrichtung z parallel und in Richtung der Gravitationskraft g orientiert ist.

Die Dokumentenkörper 2 können hierbei durch die Einführöffnungen 6 in die jeweiligen Aufnahmefächer 4a, ..., 4d eingeführt werden.

Dargestellt sind weiter Mittellinien 8 der Aufnahmefächer 4a, ..., 4d. Hierbei ist dargestellt, dass sich die Mittellinien 8 in einem gemeinsamen Mittelpunkt M schneiden.

Somit sind die Aufnahmefächer 4a, 4b, 4c, 4d der Dokumenten-Aufnahmeeinrichtung 3 schräg zueinander angeordnet. Ist die Ausführöffnung 7 eines Aufnahmefachs 4a, ..., 4d verschlossen, so kann ein Dokumentenkörper 2 nicht durch die Ausführöffnung 7 aus dem entsprechenden Aufnahmefach 4a, ..., 4d ausgeführt werden. Wird jedoch die Ausführöffnung 7 geöffnet, so wird der Dokumentenkörper 2 entlang einer Ausführrichtung, die entlang der entsprechenden Mittellinie 8 orientiert ist, aus dem entsprechenden Aufnahmefach 4a, ..., 4d ausgeführt. Die Bewegung wird hierbei durch die auf den Dokumentenkörper 2 wirkende Gewichtskraft g bewirkt. Dies bedeutet, dass die Antriebskraft zum Ausführen eines Dokumentenkörpers 2 durch die Ausführöffnung 7 durch einen Anteil der Gewichtskraft bedingt wird. Insbesondere ist neben der Gewichtskraft keine weitere Antriebskraft erforderlich, um den Dokumentenkörper 2 aus den Aufnahmefächern 4a, ..., 4d durch die Ausführöffnungen 7 herauszutransportieren.

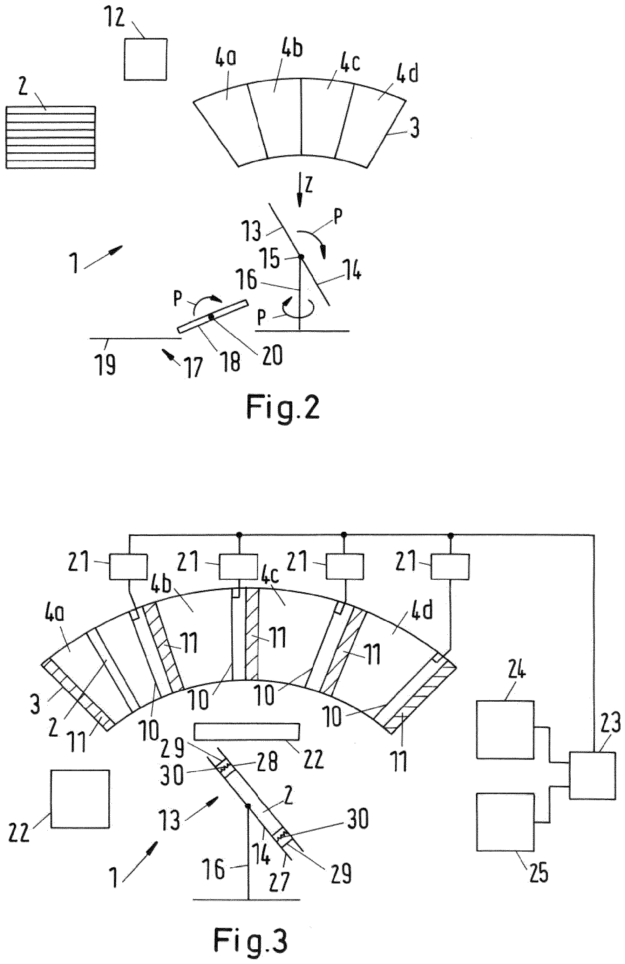

Weiter dargestellt ist, dass die Aufnahmefächer 4a, ..., 4d Aufnahmeschlitze 9 zur Aufnahme von Leiterplatten 10 (siehe Fig. 3) aufweisen.

Weiter dargestellt sind Trennelemente 11 zwischen benachbarten Aufnahmefächern 4a, ..., 4d. Trennelemente 11 können hierbei auch Randelemente 11 der Dokumenten-Aufnahmeeinrichtung 3 sein. Die Trennelemente 11 oder alle Trennelemente11 bis auf die Randelemente können ein nicht dargestelltes Schirmelement zur elektromagnetischen Abschirmung zweier benachbarter Aufnahmefächer 4a, ..., 4d umfassen oder ausbilden.

Weiter kann in zumindest einem Abschnitt der Trennelemente 11 zumindest ein Teil der Mittel 26 zum Öffnen und Schließen der Ausführöffnungen 7 angeordnet sein. Beispielsweise ist vorstellbar, dass ein Mittel 26 einen Pneumatikzylinder umfasst, wobei ein Teil eines Pneumatikzylinders in einem unteren Abschnitt der Trennelemente 11 angeordnet ist. Der Pneumatikzylinder (nicht dargestellt) kann hierbei derart angeordnet sein, dass ein beweglicher Teil des Pneumatikzylinders, insbesondere der Kolben, in einem zumindest teilweise ausgefahrenen Zustand die Ausführöffnung 7 verschließt, sodass ein Dokumentenkörper 2 nicht aus dem entsprechenden Aufnahmefach 4a, ..., 4d herausbewegt werden kann, insbesondere herausfallen kann. In einem zumindest teilweise oder vollständig eingefahrenen Zustand des beweglichen Teils kann die Ausführöffnung 7 geöffnet sein, wodurch ein Dokumentenkörper 2 durch die Ausführöffnung 7 herausbewegt, insbesondere herausfallen, kann.

Fig. 1a zeigt eine schematische Draufsicht auf die in Fig. 1 dargestellte Vorrichtung 1. Dargestellt ist wiederum die Dokumenten-Aufnahmeeinrichtung 3 mit den Aufnahmefächern 4a, 4b, 4c, 4d. In einem ersten Aufnahmefach 4a ist ein Dokumentenkörper 2 angeordnet, wobei dargestellt ist, dass dieser mit seinen Randbereichen in Aufnahmeschlitzen 5 des Aufnahmefachs 4a angeordnet ist. Die dargestellte Lage des Dokumentenkörpers 2 kann auch als Signalübertragungslage bezeichnet werden. Weiter dargestellt sind Aufnahmeschlitze 9 für Leiterplatten 10.

Aus Fig. 1 und Fig. 1a ergibt sich, dass die Dokumenten-Aufnahmeeinrichtung 3 als Teil eines Mantelabschnitts eines Hohlzylinders ausgebildet sein kann, wobei in dem Mantelabschnitt die Aufnahmefächer 4a, ..., 4d ausgebildet sind. Die Einführöffnungen 6 sind hierbei an einer äußeren Mantelfläche 6 und die Ausführöffnungen 7 an einer inneren Mantelfläche des Mantelabschnitts angeordnet.

Durch Schrägstellung der Aufnahmefächer 4a, ..., 4d zueinander ergibt sich in vorteilhafter Weise, dass in jedem der Aufnahmefächer 4a, ..., 4d angeordnete Dokumentenkörper 2 aufgrund der Gravitationskraft aus diesen Aufnahmefächern 4a, ..., 4d ausgeführt werden können.

Fig. 2 zeigt eine weitere schematische Darstellung einer erfindungsgemäßen Vorrichtung 1. Die Vorrichtung 1 umfasst hierbei wiederum die Dokumenten-Aufnahmeeinrichtung 3, wobei die Aufnahmefächer 4a, 4b, 4c, 4d nur schematisch dargestellt sind. Weiter umfasst die Vorrichtung 1 eine Einrichtung 12 zur Einführung von Dokumentenkörpern 2 in die Aufnahmefächer 4a, ..., 4d, insbesondere durch die in Fig. 1 dargestellten Einführöffnungen 6. Die Einrichtung 12 kann hierbei insbesondere als Gelenkarmroboter ausgebildet sein, die von einem Stapelmagazin angeordnete Dokumentenkörper 2 entnimmt, in eine gewünschte Orientierung versetzt und dann in die Aufnahmefächer 4a, ..., 4d einführt.

Weiter umfasst die Vorrichtung 1 eine als Drehtisch 13 ausgebildete weitere Aufnahmeeinrichtung für einen Dokumentenkörper 2. Der Drehtisch umfasst einen bewegbaren Teil 14, der um eine erste Rotationsachse 15 verdreht werden kann. Dies ist schematisch durch einen Pfeil P dargestellt. Der bewegliche Teil 14 ist hierbei an einer Tragstruktur 16 angeordnet, die um eine weitere Rotationsachse verdreht werden kann, die parallel zur Haupttransportrichtung z orientiert ist. Dies ist durch einen weiteren Pfeil P dargestellt.

Der bewegbare Teil 14 des Drehtisches 13 bildet eine Auflagefläche für einen Dokumentenkörper 2, insbesondere für einen Randbereich des Dokumentenkörpers 2, aus.

Der Drehtisch 13, insbesondere der bewegbare Teil 14, ist um die erste Drehachse 15 in vier Übergabelagen verdrehbar. Jede der vier Übergabelagen ist einem Aufnahmefach 4a, ..., 4d zugeordnet. Wird z.B. der bewegbare Teil 14 des Drehtisches 13 in eine erste Übergabelage bewegt, so kann ein Dokumentenkörper 2 entlang einer Ausführrichtung aus dem ersten Aufnahmefach 4a durch die entsprechende Ausführöffnung 7 ausgeführt und auf die Auflagefläche des bewegbaren Teils 14 transportiert werden. Diese Bewegung kann insbesondere eine Bewegung entlang einer geradlinigen Bewegungstrajektorie sein, die parallel oder konzentrisch zur Mittellinie des ersten Aufnahmefachs 4a orientiert sein. Mit anderen Worten gleitet ein Dokumentenkörper 2 aus dem ersten Aufnahmefach 4a auf die Auflagefläche des bewegbaren Teils 14, wenn die Ausführöffnung 7 des ersten Aufnahmefachs 4a geöffnet wird und sich der bewegbare Teil 14 in der ersten Übergabelage befindet. Dies gilt entsprechend für die weiteren Übergabelagen, die den weiteren Aufnahmefächern 4b, 4c, 4d zugeordnet sind.

Der Drehtisch 13 kann von einem Befestigungszustand in einen Freigabezustand versetzt werden. Im Befestigungszustand kann ein auf der Auflagefläche angeordneter Dokumentenkörper an dem bewegbaren Teil 14 befestigt, insbesondere geklemmt, werden.

Im Freigabezustand kann eine Bewegung des Dokumentenkörpers 2 zur Auflagefläche und von der Auflagefläche weg zugelassen sein.

Weiter umfasst die Vorrichtung 1 eine Ausgabeeinrichtung 17. Die Ausgabeeinrichtung 17 umfasst ein erstes Auflageelement 18 und ein weiteres Auflageelement 19. Das erste Auflageelement 18 ist drehbar um eine Drehachse 20 drehbar, wobei die Drehung schematisch durch einen Pfeil P dargestellt ist. Die Drehachse 20 kann hierbei parallel zur Drehachse 15 des bewegbaren Teils 14 des Drehtisches 13 orientiert sein, wenn sich der Drehtisch 13 in einer Übergabelage befindet. Das bewegbare Teil 14 und das erste Auflageelement 18 können hierbei in jeweilige Ausgabelagen bewegt werden. Wird in der Ausgabelage der Drehtisch 13 in den Freigabezustand versetzt, so kann der Dokumentenkörper sich aufgrund der Gravitationskraft von der Auflagefläche des bewegbaren Teils 14 des Drehtisches 13 zum ersten Auflageelement 18 bewegen. Mit anderen Worten gleitet der Dokumentenkörper 2 von dem bewegbaren Teil 14 des Drehtisches 13 auf das Auflageelement 18. Durch Drehung des Auflageelements 18 kann ein Dokumentenkörper 2 auf das Auflageelement 19 transportiert werden, wobei der Dokumentenkörper 2 umgedreht wird.

Es ist möglich, dass im Bereich der Ausgabeeinrichtung 17, insbesondere unter dem weiteren Auflageelement 19, eine nicht dargestellte RFID-Leseeinrichtung angeordnet ist, die auf oder in einem Dokumentenkörper 2 gespeicherte Informationen auslesen kann. Durch Auslesen dieser Informationen kann eine Qualität-und/oder Funktionsprüfung des Dokumentenkörpers 2 durchgeführt werden.

Fig. 3 zeigt eine weitere schematische Darstellung einer erfindungsgemäßen Vorrichtung 1, die Teil einer Vorrichtung zur Herstellung eines Dokuments sein kann. Die Vorrichtung 1 umfasst die Dokumenten-Aufnahmeeinrichtung 3 mit den Aufnahmefächern 4a, 4b, 4c, 4d. Weiter dargestellt ist, dass in dem ersten Aufnahmefach 4a ein Dokumentenkörper 2 angeordnet ist. Weiter dargestellt sind Trennelemente 11 zwischen den Aufnahmefächern 4a, ..., 4d.

Weiter dargestellt ist der Drehtisch 13, wobei der Drehtisch 13 einen bewegbaren Teil 14 und eine drehbare Haltestruktur 16 umfasst. Bezüglich des Drehtisches 13 wird auf die Erläuterungen zu Fig. 2 verwiesen. In Fig. 3 ist ein Dokumentenkörper 2 dargestellt, der auf einer Auflagefläche des bewegbaren Teil 14 angeordnet ist. Weiter dargestellt ist ein erstes Klemmelement 27 und ein weiteres Klemmelement 28, zwischen denen der Dokumentenkörper 2 geklemmt ist. Schematisch dargestellt sind Federelemente 30, durch die die Klemmelemente 27, 28 verbunden sind. Weiter dargestellt sind Betätigungselemente 29, durch die die Klemmelemente 27, 28 ebenfalls verbunden sind. Die Betätigungselemente 29 können insbesondere pneumatisch betrieben werden. Wird keine Kraft durch die Betätigungselemente 29 auf die Klemmelemente 27, 28 ausgeübt, so wirkt zwischen den Klemmelementen 27, 28 nur die Federkraft der Federelemente 30. Aufgrund der Federkraft kann der Dokumentenkörper 2 in einer Befestigungslage geklemmt werden (Befestigungszustand). Weiter kann durch die Betätigungselemente 29 eine Betätigungskraft derart auf die Klemmelemente 27, 28 ausgeübt werden, dass der Befestigungszustand aufgehoben wird. Die Betätigungskraft kann insbesondere größer als die Federkraft und dieser entgegengerichtet sein. Die Klemmelemente 27, 28 können hierbei rahmenförmig ausgebildet sein oder einen rahmenförmigen Abschnitt umfassen. Somit kann der Dokumentenkörper 2 nur im Bereich eines Randes geklemmt werden und ein zentraler Bereich einer Vorder- und Rückseite des Dokumentenkörpers 2 kann weiterhin frei zugänglich sein, insbesondere für eine Laserbeschriftung.

Weiter dargestellt sind Leiterplatten 10, die in den Aufnahmefächern 4a, ..., 4d angeordnet sind. Hierbei können Randbereiche der Leiterplatten 10 in Aufnahmeschlitzen 9 (siehe Fig. 1) der Aufnahmefächer 4a, ..., 4d angeordnet sein. Insbesondere sind die Aufnahmeschlitze 5, 9 für Dokumentenkörper 2 und Leiterplatten 10 derart angeordnet und ausgebildet, dass die Leiterplatten 10 parallel zu Dokumentenkörpern 2 orientiert sind, die in dem entsprechenden Aufnahmefach 4a, ..., 4d angeordnet sind, insbesondere in einer Signalübertragungslage. Auf oder in den Leiterplatten 10 wird eine Antennenstruktur (nicht dargestellt) ausgebildet, die zum Senden und Empfangen von Signalen für eine Informationsübertragung zwischen einer Kommunikationseinrichtung des Dokumentenkörpers 2 und Kommunikationseinrichtungen 21 der Vorrichtung 1 dient. Die Kommunikationseinrichtungen 21 sind hierbei signaltechnisch mit den Antennenstrukturen verbunden. Insbesondere können die Kommunikationseinrichtungen 21 sogenannte RFID-Einrichtungen sein. Durch die Kommunikationseinrichtungen 21 können Signale erzeugt werden, die mittels der Antennenstruktur zur Kommunikationseinrichtung des Dokumentenkörpers 2, insbesondere zum Speichern von Daten auf den Dokumentenkörper 2, übertragen werden. Auch können mit den Kommunikationseinrichtungen 21 Signale ausgewertete werden, die von der Kommunikationseinrichtung des Dokumentenkörpers 2, ausgesendet und mittels der Antennenstruktur empfangen wurden.

Weiter dargestellt ist, dass die Kommunikationseinrichtungen 21 außerhalb der Dokumenten-Aufnahmeeinrichtung 3 angeordnet sind. Beispielsweise können diese auf einer gemeinsamen Grundplatte angeordnet sein, die an der Dokumenten-Aufnahmeeinrichtung 3 befestigt ist.

Weiter dargestellt ist, dass die Vorrichtung 1 Beleuchtungseinrichtungen 22 umfasst. Hierbei ist dargestellt, dass die Beleuchtungseinrichtungen 22 einen Dokumentenkörper 2 beleuchten können, der auf der Auflagefläche des Drehtisches 13 angeordnet ist. Selbstverständlich sind die Beleuchtungseinrichtungen 22 derart angeordnet, dass der Transport aus den Aufnahmefächern 4a, ..., 4d zum Drehtisch 13 nicht behindert wird.

Weiter dargestellt ist eine zentrale Steuer- und Auswerteeinrichtung 23. Diese kann einen Betrieb der Kommunikationseinrichtungen 21, der Beleuchtungseinrichtungen 22 sowie einen Betrieb einer Bilderfassungseinrichtung 24 und einer Laserbeschriftungseinrichtung 25 steuern.

Weiter kann die zentralen Steuer- und Auswerteeinrichtung 23 auch einen Betrieb der Einrichtung 12 zur Einführung (siehe Fig. 2) sowie eine Betrieb der Mittel 26 zum Öffnen und Schließen einer Ausführöffnung 7, den Betrieb des Drehtischs 13, der Betätigungselemente 29 sowie den Betrieb der Ausgabeeinrichtung 17 steuern.

Hierzu ist die zentrale Steuer- und Auswerteeinrichtung 23 daten- und signaltechnisch mit den entsprechenden Einrichtungen verbunden. In Fig. 3 sind schematisch daten- und/oder signaltechnische Verbindungen zu den Kommunikationseinrichtungen 21, der Bilderfassungseinrichtung 24 sowie der Laserbeschriftungseinrichtung 25 dargestellt. Die weiteren daten- und/oder signaltechnischen Verbindungen sind der Übersichtlichkeit halber nicht dargestellt. Die Bilderfassungseinrichtung 24 ist hierbei derart angeordnet, dass ein Dokumentenkörper 2, der auf einer Auflagefläche des Drehtisches 13 angeordnet, insbesondere befestigt, ist, sich im Erfassungsbereich der Bilderfassungseinrichtung 24 befindet, wenn der Dokumentenkörper 2 durch den Drehtisch 13 in einer Abbildungslage angeordnet wurde. Die Laserbeschriftungseinrichtung 25, insbesondere Teile davon, ist hierbei derart ausgebildet und/oder angeordnet, dass ein auf der Auflagefläche des Drehtisches 13 angeordneter Dokumentenkörper in einem Bestrahlungsbereich der Laserbeschriftungseinrichtung 25 angeordnet ist, wenn der Dokumentenkörper 2 durch den Drehtisch 13 in einer (von mehreren) Beschriftungslage(n) angeordnet wurde.

Nicht dargestellt sind Mittel zur Strahllenkung eines von der Laserbeschriftungseinrichtung 25 erzeugten Laserstrahls.

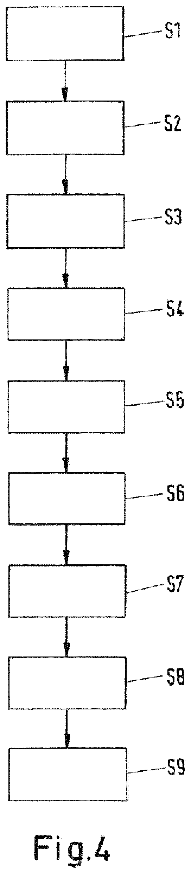

In Fig. 4 ist ein schematisches Flussdiagramm eines erfindungsgemäßen Verfahrens dargestellt. In einem ersten Schritt S1 wird ein Dokumentenkörper 2 z.B. durch eine Einrichtung 12 zur Einführung durch eine Einführungsöffnung 6 (siehe Fig. 1) in einem Aufnahmefach 4a, ..., 4d der Dokumenten-Aufnahmeeinrichtung 3 angeordnet. Hierzu kann der Dokumentenkörper 2 in Aufnahmeschlitze 5 des Aufnahmefachs 4a, ..., 4d eingeführt werden. Weiter ist die Ausführöffnung 7 des entsprechenden Aufnahmefachs 4a, ..., 4d verschlossen. In einem zweiten Schritt S2 werden drahtlos Informationen zwischen einer Kommunikationseinrichtung des Dokumentenkörpers 2, beispielsweise einem RFID-Chip, und einer Kommunikationseinrichtungen 21 der Vorrichtung 1 über eine Antennenstruktur auf einer Leiterplatte 10, die im Aufnahmefach 4a, ..., 4d angeordnet ist, übertragen, wenn sich der Dokumentenkörper in einer Signalübertragungslage im jeweiligen Aufnahmefach 4a,...,4d befindet. Diese Informationsübertragung kann einer Personalisierung und/oder Individualisierung des Dokumentenkörpers 2 dienen.

In einem dritten Schritt S3 wird der Drehtisch 13 (siehe z.B. Fig. 2) in eine Übergabelage bewegt, die dem entsprechenden Aufnahmefach 4a, ..., 4d zugeordnet ist. Nachdem sich der Drehtisch 13 in dieser Übergabelage befindet, wird in einem vierten Schritt S4 die Ausführöffnung 7 des entsprechenden Aufnahmefachs 4a, ..., 4d geöffnet. Der Dokumentenkörper 2 gleitet dann aufgrund der Gewichtskraft aus dem entsprechenden Aufnahmefach 4a, ..., 4d durch die Ausführöffnung 7 hinaus und auf eine Auflagefläche des Drehtisches 13. Nachdem der Dokumentenkörper 2 auf der Auflagefläche angeordnet ist, wird in einem fünften Schritt S5 der Drehtisch 13 in einen Befestigungszustand versetzt. Hiernach kann der Drehtisch 13 in einem sechsten Schritt S6 in eine Abbildungslage bewegt werden, wobei zumindest ein Teil der Oberfläche des Dokumentenkörpers 2 auf der Auflagefläche von der Bilderfassungseinrichtung 24 abgebildet wird. Hierdurch kann eine genaue Raumposition und Raumorientierung des Dokumentenkörpers 2 auf dem Drehtisch 13 bestimmt werden. Dies ermöglicht wiederum die genaue Positionierung eines Laserstrahls 25 zur Laserbeschriftung. Hiernach kann der Drehtisch 13 in einem siebten Schritt S7 in eine Beschriftungslage versetzt werden. In der Beschriftungslage kann eine Laserbeschriftung des Dokumentenkörpers 2 durchgeführt werden. Selbstverständlich ist vorstellbar, dass verschiedene Laserbeschriftungsvorgänge durchgeführt werden, wobei für jeden Laserbeschriftungsvorgang der Drehtisch 13 in eine andere Beschriftungslage bewegt wird. Nach Abschluss der Laserbeschriftung kann in einem achten Schritt S8 der Drehtisch 13 eine Ausgabelage bewegt werden. Weiter kann der Drehtisch 13 in den Freigabezustand versetzt werden. In der Ausgabelage kann der Dokumentenkörper 2 von der Auflagefläche des Drehtisches 13 auf eine Auflagefläche des ersten Auflageelements 18 gleiten.

In einem neunten Schritt S9, der allerdings optional ist, kann das erste Auflageelement 18 um eine Drehachse 20 gedreht werden, um den Dokumentenkörper 2 auf ein weiteres Auflageelement 19 der Ausgabeeinrichtung 17 zu transportieren.

In dem neunten Schritt S9 oder in einem nicht dargestellten zehnten Schritt S10 kann eine Qualitäts- und/oder Funktionsprüfung des Dokumentenkörpers 2 durchgeführt werden. Hierzu können insbesondere in oder auf dem Dokumentenkörper 2 gespeicherte Informationen ausgelesen werden, z.B. mittels einer RFID-Leseeinrichtung.

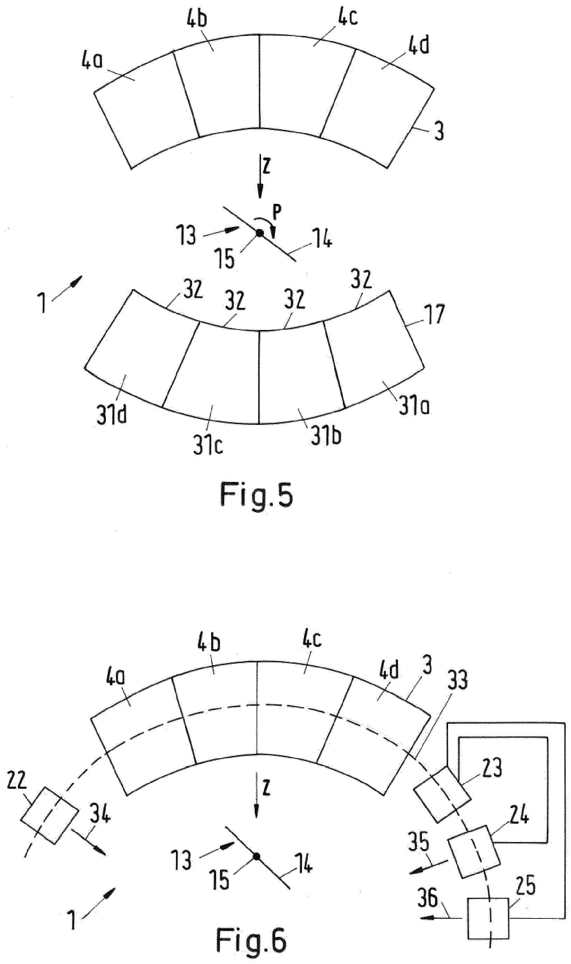

Fig. 5 zeigt eine weitere schematische Darstellung einer erfindungsgemäßen Vorrichtung 1 in einer weiteren Ausführungsform. Hierbei ist die in Fig. 4 dargestellte Ausführungsform im Wesentlichen wie die in Figur 2 dargestellte Ausführungsform ausgebildet. Daher kann auf die Ausführungen bezüglich Figur 2 verwiesen werden. Im Unterschied zu der in Figur 2 dargestellten Ausführungsform umfasst die Vorrichtung 1 eine Ausgabeeinrichtung 17, wobei die Ausgabeeinrichtung 17 mehrere Aufnahmefächer 31a, 31b, 31c, 31d umfasst. Dargestellt sind weiter Einführöffnungen 32 dieser Aufnahmefächer 31a,..., 31d.

Die Aufnahmefächer 31a, ..., 31d dienen zur Aufnahme von Dokumentenkörpern 2. Die Ausgabeeinrichtung 17 kann hierbei wie die Dokumenten-Aufnahmeeinrichtung 3 ausgebildet sein. Jedes Aufnahmefach 31a, ..., 31d weist eine Einführöffnung 6 und kann eine Ausführöffnung aufweisen. Die Ausführöffnung kann verschließbar sein. Die Dokumentenkörper 2 können hierbei durch die Einführöffnungen 6 in die jeweiligen Aufnahmefächer 4a, ..., 4d eingeführt werden. Weiter dargestellt ist die Haupttransportrichtung z.

Nicht dargestellt sind Mittellinien der Aufnahmefächer 31a, ..., 31d. Diese können sich in einem gemeinsamen Mittelpunkt schneiden, wobei dieser Mittelpunkt dem Schnittpunkt der Mittellinien 8 der Aufnahmefächer 4a, ..., 4d der Dokumenten-Aufnahmeeinrichtung 3 entsprechen kann. Der Mittelpunkt kann insbesondere auf der Drehachse 15 des Drehtischs 13 angeordnet sein.

Somit sind die Aufnahmefächer 31a, ..., 31d der Ausgabeeinrichtung 17 schräg zueinander angeordnet.

Hierbei kann der Drehtisch 13, insbesondere dessen beweglicher Teil, in mehrere Ausgabelagen bewegt werden, wobei eine Ausgabelage einem der Aufnahmefächer 31a, ..., 31d der Ausgabeeinrichtung 17 zugeordnet ist. In der entsprechenden Ausgabelage kann ein Dokumentenkörper 2 (siehe Figur 1) von dem Drehtisch in das der Ausgabelage zu geordnete Aufnahmefach 31a,..., 31 d bewegt werden. Hierbei kann die Gravitationskraft zumindest einen Teil der Antriebskraft für diese Bewegung bereitstellen. Hierbei kann ein erstes Aufnahmefach 31a den Dokumentenkörpern 2 zugeordnet sein, die in einem Prüfschritt als Ausschuss klassifiziert wurden. Ein zweites Aufnahmefach 31b kann den Dokumentenkörpern 2 zugeordnet sein, die in dem Prüfschritt als fehlerhaft klassifiziert wurden. Ein drittes und viertes Aufnahmefach 31c, 31d kann den Dokumentenkörpern 2 zugeordnet sein, die in dem Prüfschritt als fehlerfrei klassifiziert wurden. Somit können durch Bewegung des Drehtischs 13 als Ausschuss klassifizierte Dokumentenkörper 2 in dem ersten Aufnahmefach 31a, als fehlerhaft klassifizierte Dokumentenkörper 2 in dem zweiten Aufnahmefach 31b und als fehlerfrei klassifizierte Dokumentenkörper 2 in dem dritten oder vierten Aufnahmefach 31c, 31d angeordnet werden.

Weiter ist es möglich, dass in einem der Aufnahmefächer 31 a, ..., 31d angeordneter Dokumentenkörper 2 durch eine nicht dargestellte Ausführöffnung des Aufnahmefachs 31a,..., 31d einem weiteren Transport-oder Prozessschritt zugeführt wird.

Es ist möglich, dass im Bereich der Ausgabeeinrichtung 17, insbesondere in einem Aufnahmefach 31a, ..., 31d eine nicht dargestellte RFID-Leseeinrichtung angeordnet ist, die auf oder in einem Dokumentenkörper 2 gespeicherte Informationen auslesen kann. Durch Auslesen dieser Informationen kann eine Qualität-und/oder Funktionsprüfung des Dokumentenkörpers 2 durchgeführt werden.

Figur 6 zeigt eine weitere Darstellung einer erfindungsgemäßen Vorrichtung 1 in einer weiteren Ausführungsform. Die in Figur 6 dargestellte Ausführungsform ist hierbei im Wesentlichen wie die in Figur 3 ausgebildete Ausführungsform ausgebildet. Daher kann auf die entsprechenden Ausführungen zu Figur 3 verwiesen werden. Im Unterschied zu der in Figur 3 dargestellten Ausführungsform sind die Mittelpunkte der Aufnahmefächer 4a, ...., 4d und eine Beleuchtungseinrichtung 22 entlang bzw. auf einer gestrichelt dargestellten Kreislinie 33 angeordnet. Hierbei ist die Beleuchtungseinrichtung 22 derart angeordnet, dass eine durch einen Pfeil 34 dargestellte optische Achse oder Hauptbeleuchtungsrichtung der Beleuchtungseinrichtung 22 in Radialrichtung orientiert ist, also senkrecht zur Kreislinie 33. Weiter ist auch eine Steuer- und Auswerteeinrichtung 23 entlang bzw. auf der Kreislinie 33 angeordnet. Ebenfalls auf der Kreislinie 33 angeordnet ist eine Bilderfassungseinrichtung 24. Hierbei ist die Bilderfassungseinrichtung 24 derart angeordnet, dass eine durch einen Pfeil 35 dargestellte optische Achse oder Haupterfassungsrichtung der Bilderfassungseinrichtung 24 in Radialrichtung, also senkrecht zur Kreislinie 33, orientiert ist. Weiter ist eine Laserbeschriftungseinrichtung 25 entlang bzw. auf der Kreislinie 33, angeordnet. Hierbei ist die Laserbeschriftungseinrichtung 25 derart angeordnet, dass eine durch einen Pfeil 36 dargestellte Hauptbestrahlungsrichtung der Laserbeschriftungseinrichtung 25 in Radialrichtung, also senkrecht zur Kreislinie 33, orientiert ist. Mit anderen Worten können die Mittelpunkte der Aufnahmefächer 4a,...,4d, die die Beleuchtungseinrichtung 22, die Bilderfassungseinrichtung 24, die Laserbeschriftungseinrichtung 25 und die Steuer- und Auswerteeinrichtung 23 konzentrisch angeordnet sein.

### Bezugszeichenliste

- 1: Vorrichtung
- 2: Dokumentenkörper
- 3: Dokumenten-Aufnahmeeinrichtung
- 4a, 4b, 4c, 4d: Aufnahmefächer
- 5: Aufnahmeschlitze
- 6: Einführöffnungen
- 7: Ausführöffnungen
- 8: Mittellinien
- 9: Aufnahmeschlitze
- 10: Leiterplatten
- 11: Trennelemente
- 12: Einrichtung zur Einführung
- 13: Drehtisch
- 14: bewegbarer Teil des Drehtisches
- 15: Drehachse
- 16: Tragstruktur des Drehtisches
- 17: Ausgabeeinrichtung
- 18: erstes Auflageelement der Ausgabeeinrichtung 17
- 19: weiteres Auflageelement der Ausgabeeinrichtung 17
- 20: Drehachse
- 21: Kommunikationseinrichtung
- 22: Beleuchtungseinrichtung
- 23: Steuer- und Auswerteeinrichtung
- 24: Bilderfassungseinrichtung
- 25: Laserbeschriftungseinrichtung
- 26: Mittel zum Öffnen und Schließen
- 27: erstes Klemmelement
- 28: weiteres Klemmelement
- 29: Betätigungselement
- 30: Federelement
- 31a, 31b, 31c, 31d: Aufnahmefach
- 32: Einführöffnung der Ausgabeeinrichtung
- 33: Kreislinie
- 34: Pfeil
- 35: Pfeil
- 36: Pfeil
- P: Pfeil
- z: Haupttransportrichtung
- g: Gewichtskraft
- M: Mittelpunkt

## Patentansprüche

1. Vorrichtung zum Transport von Dokumentenkörpern (2), wobei die Vorrichtung (1) mindestens eine Dokumenten-Aufnahmeeinrichtung (3) umfasst, wobei die Dokumenten-Aufnahmeeinrichtung (3) mindestens zwei Aufnahmefächer (4a, ..., 4d) aufweist oder ausbildet, wobei jedes Aufnahmefach (4a, ..., 4d) eine Einführöffnung (6) und eine Ausführöffnung (7) aufweist, wobei die Dokumenten-Aufnahmeeinrichtung (3) mindestens ein Mittel (26) zum Öffnen und Schließen der Ausführöffnung umfasst, wobei die Aufnahmefächer (4a, ..., 4d) der Dokumenten-Aufnahmeeinrichtung (3) schräg zueinander orientiert sind,
**dadurch gekennzeichnet, dass**
die Einführöffnung (6) und die Ausführöffnung (7) jedes Aufnahmefachs (4a, ..., 4d) an verschiedenen Enden des Aufnahmefachs (4a, ..., 4d) angeordnet sind.

2. Vorrichtung nach Anspruch 1, **dadurch gekennzeichnet, dass** die Vorrichtung (1) eine weitere Aufnahmeeinrichtung umfasst, wobei die weitere Aufnahmeeinrichtung in mehrere voneinander verschiedene Übergabelagen bewegbar ist, wobei eine Übergabelage einem Aufnahmefach (4a, ..., 4d) zugeordnet ist, wobei ein in einem Aufnahmefach (4a, ..., 4d) aufgenommener Dokumentenkörper (2) durch die Ausführöffnung (7) zur weiteren Aufnahmeeinrichtung bewegbar ist, wenn sich die weitere Aufnahmeeinrichtung in der dem Aufnahmefach (4a, ..., 4d) zugeordneten Übergabelage befindet.

3. Vorrichtung nach Anspruch 2, **dadurch gekennzeichnet, dass** zumindest ein Teil der weiteren Aufnahmeeinrichtung um mindestens eine erste Drehachse (15) in voneinander verschiedene Übergabelagen drehbar ist.

4. Vorrichtung nach einem der Ansprüche 2 oder 3, **dadurch gekennzeichnet, dass** die weitere Aufnahmeeinrichtung zusätzlich um eine weitere Drehachse drehbar ist.

5. Vorrichtung nach einem der Ansprüche 2 bis 4, **dadurch gekennzeichnet, dass** die weitere Aufnahmeeinrichtung ein erstes Klemmelement und mindestens ein weiteres Klemmelement umfasst, wobei zumindest ein umlaufender Randabschnitt des Dokumentenkörpers (2) zwischen den Klemmelementen klemmbar ist.

6. Vorrichtung nach Anspruch 5, **dadurch gekennzeichnet, dass** zumindest ein Klemmelement zumindest einen Rahmenabschnitt umfasst oder als Rahmen ausgebildet ist.

7. Vorrichtung nach einem der Ansprüche 2 bis 6, **dadurch gekennzeichnet, dass** die Vorrichtung mindestens ein Ausgabeeinrichtung (17) mit mindestens einem Ausgabefach umfasst, wobei die weitere Aufnahmeeinrichtung in mindestens eine Ausgabelage bewegbar ist, wobei die Ausgabelage dem Ausgabefach zugeordnet ist, wobei ein von der weiteren Aufnahmeeinrichtung aufgenommener Dokumentenkörper (2) zu dem Ausgabefach bewegbar ist, wenn sich die weitere Aufnahmeeinrichtung in der Ausgabelage befindet.

8. Vorrichtung nach einem der vorangegangenen Ansprüche, **dadurch gekennzeichnet, dass** die Vorrichtung (1) mindestens eine Beleuchtungseinrichtung (22) umfasst und/oder dass die Vorrichtung (1) mindestens eine Bilderfassungseinrichtung (24) umfasst und/oder dass ein Aufnahmefach (4a, ..., 4d) mindestens eine Antennenstruktur aufweist und/oder dass die Vorrichtung (1) mindestens eine RFID-Leseeinrichtung umfasst, wobei die mindestens eine RFID-Leseeinrichtung mit mindestens einer Antennenstruktur signaltechnisch verbunden ist und/oder dass ein Aufnahmefach (4a, ..., 4d) mindestens eine Antennenstruktur aufweist und/oder dass die Vorrichtung (1) mindestens einen Teil einer Lasereinrichtung (25) und/oder dass die Vorrichtung mindestens einen Teil einer Druckeinrichtung umfasst.

9. Verfahren zum Transport von Dokumentenkörpern mittels einer Vorrichtung (1) gemäß einer der Ansprüche 1 bis 8, wobei eine Ausführöffnung (7) mindestens eines Aufnahmefaches (4a, ..., 4d) geöffnet wird.

10. Verfahren nach Anspruch 9, **dadurch gekennzeichnet, dass** die weitere Aufnahmeeinrichtung in eine dem Aufnahmefach (4a, ...,4d) zugeordnete Übergabelage bewegt wird, wobei die Ausführöffnung (7) des Aufnahmefachs (4a, ... ,4d) geöffnet wird, wenn sich die weitere Aufnahmeeinrichtung in dieser Übergabelage befindet.

11. Verfahren nach einem der Ansprüche 9 oder 10, **dadurch gekennzeichnet, dass** eine weitere Aufnahmeeinrichtung in einen Befestigungszustand versetzt wird, wenn sich der Dokumentenkörper (2) in einer Befestigungslage befindet.

12. Verfahren nach einem der Ansprüche 9 bis 11, **dadurch gekennzeichnet, dass** die weitere Aufnahmeeinrichtung im Befestigungszustand in verschiedene Raumlagen bewegt wird.

13. Verfahren nach einem der Ansprüche 9 bis 12, **dadurch gekennzeichnet, dass** ein Abbild zumindest eines Teils des Dokumentenkörpers (2) erzeugt wird und/oder zumindest ein Teil der Dokumentenkörpers beleuchtet wird und/oder eine Laserbeschriftung durchgeführt wird und/oder dass Informationen zwischen einem Dokumentenkörper (2) und einer dokumentenkörperexternen Einrichtung übertragen werden, wenn der Dokumentenkörper (2) in einem Aufnahmefach (4a, ..., 4d, 31a, ..., 31d) angeordnet ist.

14. Verfahren nach einem der Ansprüche 9 bis 13, **dadurch gekennzeichnet, dass** die weitere Aufnahmeeinrichtung in eine Ausgabelage bewegt, wobei die weitere Aufnahmeeinrichtung in der Ausgabelage in einen Freigabezustand versetzt wird.

15. Vorrichtung zur Herstellung eines Wert- und/oder Sicherheitsdokuments, wobei die Vorrichtung eine Vorrichtung (1) zum Transport gemäß einer der Ansprüche 1 bis 8 umfasst, wobei ein Aufnahmefach (4a, ..., 4d) mindestens eine Antennenstruktur aufweist.

16. Verfahren zur Herstellung eines Wert- und/oder Sicherheitsdokuments mittels einer Vorrichtung gemäß Anspruch 15, wobei Informationen zwischen einem Dokumentenkörper (2) und einer dokumentenkörperexternen Einrichtung übertragen werden, wenn der Dokumentenkörper (2) in einem Aufnahmefach (4a, ..., 4d) angeordnet ist.

## Claims

1. Device for transporting document bodies (2), wherein the device (1) comprises at least one document reception apparatus (3), wherein the document reception apparatus (3) comprises or forms at least two reception compartments (4a,...,4d), wherein each reception compartment (4a,...,4d) has an inlet opening (6) and an outlet opening (7), wherein the document reception apparatus (3) comprises at least one means (26) for opening and closing the outlet opening, wherein the reception compartments (4a,...,4d) of the document reception apparatus (3) are oriented obliquely to one another, **characterised in that**
the inlet opening (6) and the outlet opening (7) of each reception compartment (4a,...,4d) are arranged at different ends of the reception compartment (4a,...,4d).

2. Device according to claim 1, **characterised in that** the device (1) comprises a further reception apparatus, wherein the further reception apparatus is movable into several transfer positions which differ from one another, wherein one transfer position is allocated to one reception compartment (4a,...,4d), wherein a document body (2) which is received in a reception compartment (4a,...,4d) can be moved through the outlet opening (7) to the further reception apparatus when the further reception apparatus is located in the transfer position which is allocated to the reception compartment (4a,... ,4d).

3. Device according to claim 2, **characterised in that** at least one part of the further reception apparatus can be rotated about at least one first axis of rotation (15) into transfer positions which differ from one another.

4. Device according to any one of claims 2 or 3, **characterised in that** the further reception apparatus can additionally be rotated about a further axis of rotation.

5. Device according to any one of claims 2 to 4, **characterised in that** the further reception apparatus comprises a first clamping element and at least one further clamping element, wherein at least one circumferential edge section of the document body (2) can be clamped between the clamping elements.

6. Device according to claim 5, **characterised in that** at least one clamping element comprises at least one frame section or is configured as a frame.

7. Device according to any one of claims 2 to 6, **characterised in that** the device comprises at least one output apparatus (17) with at least one output compartment, wherein the further reception apparatus can be moved into at least one output position, wherein the output position is assigned to the output compartment, wherein a document body (2) which is received by the further reception apparatus can be moved to the output compartment when the further reception apparatus is located in the output position.

8. Device according to any one of the preceding claims, **characterised in that** the device (1) comprises at least one lighting apparatus (22), and/or the device (1) comprises at least one image detecting apparatus (24), and/or that a reception compartment (4a,...,4d) has at least one antenna structure, and/or that the device (1) comprises at least one RFID reader unit, wherein the at least one RFID reader unit is connected to at least one antenna structure by means of signal connection, and/or that a reception compartment (4a,...,4d) comprises at least one part of a laser apparatus (25), and/or that the device (1) comprises at least one part of a printing apparatus.

9. Method for transporting document bodies by means of a device (1) according to any one of claims 1 to 8, wherein an outlet opening (7) of at least one reception compartment (4a,...,4d) is opened.

10. Method according to claim 9, **characterised in that** the further reception apparatus is moved into a transfer position which is assigned to the reception compartment (4a,...,4d), wherein the outlet opening (7) of the reception compartment (4a,...,4d) is opened when the further reception apparatus is located in this transfer position.

11. Method according to any one of claims 9 or 10, **characterised in that** a further reception apparatus is set into a securing state when the document body (2) is located in a securing position.

12. Method according to any one of claims 9 to 11, **characterised in that** the further reception apparatus in the securing state is moved into different spatial locations.

13. Method according to any one of claims 9 to 12, **characterised in that** an image is produced of at least a part of the document body (2), and/or at least a part of the document body is illuminated, and/or a laser inscription procedure is carried out, and/or that information is transmitted between a document body (2) and an apparatus external to the document body when the document body (2) is arranged in a reception compartment (4a,..,4d, 31a,...,31d).

14. Method according to any one of claims 9 to 13, **characterised in that** the further reception apparatus is moved into an outlet position, wherein the further reception apparatus in the outlet position is changed into a release state.

15. Device for producing a value document and/or security document, wherein the device comprises a device (1) for transport in accordance with any one of claims 1 to 8, wherein a reception compartment (4a,...,4d) has at least one antenna structure.

16. Device for producing a value document and/or security document by means of a device according to claim 15, wherein information is transmitted between a document body (2) and an apparatus external to the document body when the document body (2) is arranged in a reception compartment (4a,..,4d).

## Revendications

1. Dispositif de transport de corps de document (2), dans lequel le dispositif (1) comprend au moins un système de réception de documents (3), dans lequel le système de réception de documents (3) présente ou forme au moins deux compartiments de réception (4a, ..., 4d), dans lequel chaque compartiment de réception (4a, ..., 4d) présente une ouverture d'introduction (6) et une ouverture d'évacuation (7), dans lequel le système de réception de documents (3) comprend au moins un moyen (26) pour ouvrir et fermer l'ouverture d'évacuation, dans lequel les compartiments de réception (4a, ..., 4d) du système de réception de documents (3) sont orientés de manière oblique les uns par rapport aux autres,
**caractérisé en ce que**
l'ouverture d'introduction (6) et l'ouverture d'évacuation (7) de chaque compartiment de réception (4a, ..., 4d) sont disposées sur des extrémités différentes du compartiment de réception (4a, ..., 4d) .

2. Dispositif selon la revendication 1, **caractérisé en ce que** le dispositif (1) comprend un autre système de réception, dans lequel l'autre système de réception peut être déplacé dans plusieurs positions de transfert différentes les unes des autres, dans lequel une position de transfert est associée à un compartiment de réception (4a, ..., 4d), dans lequel un corps de document (2) reçu dans un compartiment de réception (4a, ..., 4d) peut être déplacé à travers l'ouverture d'évacuation (7) vers l'autre système de réception quand l'autre système de réception se trouve dans la position de transfert associée au compartiment de réception (4a, ..., 4d).

3. Dispositif selon la revendication 2, **caractérisé en ce qu'**au moins une partie de l'autre système de réception peut tourner autour d'au moins un premier axe de rotation (15) dans des positions de transfert différentes les unes des autres.

4. Dispositif selon l'une quelconque des revendications 2 ou 3, **caractérisé en ce que** l'autre système de réception peut tourner en outre autour d'un autre axe de rotation.

5. Dispositif selon l'une quelconque des revendications 2 à 4, **caractérisé en ce que** l'autre système de réception comprend un premier élément de serrage et au moins un autre élément de serrage, dans lequel au moins une section de bord périphérique du corps de document (2) peut être serrée entre les éléments de serrage.

6. Dispositif selon la revendication 5, **caractérisé en ce qu'**au moins un élément de serrage comprend au moins une section de cadre ou est réalisé en tant que cadre.

7. Dispositif selon l'une quelconque des revendications 2 à 6, **caractérisé en ce que** le dispositif comprend au moins un système de distribution (17) avec au moins un compartiment de distribution, dans lequel l'autre système de réception peut être déplacé dans au moins une position de distribution, dans lequel la position de distribution est associée au compartiment de distribution, dans lequel un corps de document (2) reçu par l'autre système de réception peut être déplacé vers le compartiment de distribution quand l'autre système de réception se trouve dans la position de distribution.

8. Dispositif selon l'une quelconque des revendications précédentes, **caractérisé en ce que** le dispositif (1) comprend au moins un système d'éclairage (22) et/ou que le dispositif (1) comprend au moins un système de détection d'image (24) et/ou qu'un compartiment de réception (4a, ..., 4d) présente au moins une structure d'antenne et/ou que le dispositif (1) comprend au moins un système de lecture RFID, dans lequel l'au moins un système de lecture RFID est relié par une technique de signalisation à au moins une structure d'antenne et/ou qu'un compartiment de réception (4a, ..., 4d) présente au moins une structure d'antenne et/ou que le dispositif (1) comprend au moins une partie d'un système laser (25) et/ou que le dispositif comprend au moins une partie d'un système d'impression.

9. Procédé de transport de corps de document au moyen d'un dispositif (1) selon l'une quelconque des revendications 1 à 8, dans lequel une ouverture d'évacuation (7) d'au moins un compartiment de réception (4a, ..., 4d) est ouverte.

10. Procédé selon la revendication 9, **caractérisé en ce que** l'autre système de réception est déplacé dans une position de transfert associée au compartiment de réception (4a, ..., 4d), dans lequel l'ouverture d'évacuation (7) du compartiment de réception (4a, ..., 4d) est ouverte quand l'autre système de réception se trouve dans ladite position de transfert.

11. Procédé selon l'une quelconque des revendications 9 ou 10, **caractérisé en ce qu'**un autre système de réception est amené dans un état de fixation quand le corps de document (2) se trouve dans une position de fixation.

12. Procédé selon l'une quelconque des revendications 9 à 11, **caractérisé en ce que** l'autre système de réception est déplacé dans l'état de fixation dans des positions spatiales différentes.

13. Procédé selon l'une quelconque des revendications 9 à 12, **caractérisé en ce qu'**une reproduction d'au moins une partie du corps de document (2) est produite et/ou au moins une partie du corps de document est éclairée et/ou une inscription au laser est mise en œuvre et/ou que des informations sont transmises entre un corps de document (2) et un système externe au corps de document quand le corps de document (2) est disposé dans un compartiment de réception (4a, ..., 4d, 31a, ..., 31d).

14. Procédé selon l'une quelconque des revendications 9 à 13, **caractérisé en ce que** l'autre système de réception se déplace dans une position de distribution, dans lequel l'autre système de réception est amené dans un état de libération dans la position de distribution.

15. Dispositif de fabrication d'un document de valeur et/ou de sécurité, dans lequel le dispositif comprend un dispositif (1) de transport selon l'une quelconque des revendications 1 à 8, dans lequel un compartiment de réception (4a, ..., 4d) présente au moins une structure d'antenne.

16. Procédé de fabrication d'un document de valeur et/ou de sécurité au moyen d'un dispositif selon la revendication 15, dans lequel des informations sont transmises entre un corps de document (2) et un système externe au corps de document quand le corps de document (2) est disposé dans un compartiment de réception (4a, ..., 4d).
